# EUROPEAN PATENT APPLICATION

(11) **EP 4 578 664 A1**
(43) Date of publication of application: **02.07.2025**
(21) Application number: 24217390.4
(22) Date of filing: 04.12.2024
(51) Int. Cl.: B60C 1/00, B60C 11/00

(54) **MOTORCYCLE TIRE**

(30) Priority: 27.12.2023 JP 2023220941
(71) Applicant: SUMITOMO RUBBER INDUSTRIES, LTD., Kobe-shi, Hyogo 651-0072 (JP)
(72) Inventor: IKAI, Takuma, Kobe-shi, 651-0072 (JP)
(74) Representative: TBK

(57) **Abstract**

Provided is a motorcycle tire having excellent running performances including braking performance upon entering a corner and cornering performance. The motorcycle tire includes a tread portion (2) including a tread rubber that is divided into at least three parts in a tire width direction, the tread rubber including a center rubber (9A) at its central part in the tire width direction and shoulder rubbers (9B) respectively on opposite sides of the center rubber in the tire width direction, the tread rubber having a groove extending on both the center rubber and at least one of the shoulder rubbers, the center rubber and the shoulder rubbers each containing silica in an amount of 70 parts by mass or more per 100 parts by mass of a rubber component therein, the amount Si(S) of the silica in the shoulder rubbers and the amount Si(C) of the silica in the center rubber giving a ratio (Si(S)/Si(C)) of 0.80 or higher and 0.95 or lower, the shoulder rubbers having a 300% modulus M300(S) and the center rubber having a 300% modulus M300(C), the M300(S) and the M300(C) giving a ratio (M300(S)/M300(C)) of 1.15 or higher and 1.50 or lower.

## Description

### TECHNICAL FIELD

The present invention relates to motorcycle tires.

### BACKGROUND ART

The road-contacting part of a tread rubber of a motorcycle tire is different between during straight running and during turning. The center rubber mainly comes in contact with the road during straight running, while the shoulder rubber mainly comes in contact with the road during turning. Performance appropriate for each situation is necessary. Thus, the center rubber and the shoulder rubber of the tread rubber are often designed to have different rubber physical properties from each other (for example, Patent Literature 1).

### CITATION LIST

### PATENT LITERATURE

Patent Literature 1: JP 2004-276715 A

### SUMMARY OF DISCLOSURE

### TECHNICAL PROBLEM

Motorcycle tires with higher performances during running including braking performance upon entering a corner and cornering performance are desired in order to improve running times on race courses, for example.

The present invention aims to solve the above problem and provide a motorcycle tire having excellent running performances including braking performance upon entering a corner and cornering performance.

### SOLUTION TO PROBLEM

The present invention relates to a motorcycle tire, including a tread portion including a tread rubber that is divided into at least three parts in a tire width direction,
the tread rubber including a center rubber at its central part in the tire width direction and shoulder rubbers respectively on opposite sides of the center rubber in the tire width direction, the tread rubber having a groove extending on both the center rubber and at least one of the shoulder rubbers,
the center rubber and the shoulder rubbers each containing silica in an amount of 70 parts by mass or more per 100 parts by mass of a rubber component therein,
the amount Si(S) of the silica in the shoulder rubbers and the amount Si(C) of the silica in the center rubber giving a ratio (Si(S)/Si(C)) of 0.80 or higher and 0.95 or lower,
the shoulder rubbers having a 300% modulus M300(S) and the center rubber having a 300% modulus M300(C), the M300(S) and the M300(C) giving a ratio (M300(S)/M300(C)) of 1.15 or higher and 1.50 or lower.

### ADVANTAGEOUS EFFECTS OF DISCLOSURE

The present invention provides a motorcycle tire, including a tread portion including a tread rubber that is divided into at least three parts in a tire width direction, the tread rubber including a center rubber at its central part in the tire width direction and shoulder rubbers respectively on opposite sides of the center rubber in the tire width direction, the tread rubber having a groove extending on both the center rubber and at least one of the shoulder rubbers, the center rubber and the shoulder rubbers each containing silica in an amount of 70 parts by mass or more per 100 parts by mass of a rubber component therein, the amount Si(S) of the silica in the shoulder rubbers and the amount Si(C) of the silica in the center rubber giving a ratio (Si(S)/Si(C)) of 0.80 or higher and 0.95 or lower, the shoulder rubbers having a 300% modulus M300(S) and the center rubber having a 300% modulus M300(C), the M300(S) and the M300(C) giving a ratio (M300(S)/M300(C)) of 1.15 or higher and 1.50 or lower. This motorcycle tire can improve running performances including braking performance upon entering a corner and cornering performance.

### BRIEF DESCRIPTION OF DRAWINGS

FIG. 1 is a meridional cross-sectional view of a motorcycle tire according to an embodiment of the present disclosure including the rotational axis of the tire.
FIG. 2 is a developed plan view showing a tread pattern of a motorcycle tire according to an embodiment of the present disclosure.
FIG. 3 is a front view showing the attitude of a tire running in a tilted position.

### DESCRIPTION OF EMBODIMENTS

The motorcycle tire includes a tread portion including a tread rubber that is divided into at least three parts in a tire width direction. The tread rubber includes a center rubber at its central part in the tire width direction and shoulder rubbers respectively on opposite sides of the center rubber in the tire width direction and has a groove extending on both the center rubber and at least one of the shoulder rubbers. The center rubber and the shoulder rubbers each contain silica in an amount of 70 parts by mass or more per 100 parts by mass of a rubber component therein. The amount Si(S) of the silica in the shoulder rubbers and the amount Si(C) of the silica in the center rubber give a ratio (Si(S)/Si(C)) of 0.80 or higher and 0.95 or lower. The shoulder rubbers have a 300% modulus M300(S) and the center rubber has a 300% modulus M300(C), the M300(S) and the M300(C) giving a ratio (M300(S)/M300(C)) of 1.15 or higher and 1.50 or lower.

The mechanism of the advantageous effect of the motorcycle tire is not clear, but it is believed to be as follows.

A motorcycle runs with the body tilted when turning. The ground-contacting part of the tread portion is different between when the brakes are applied before entering a corner and when turning. The central part of the tread is in contact with the road during the application of the brakes before a corner. To enhance the braking performance, the amount of a filler (silica) in a center rubber may be increased to facilitate the heat generation in the center rubber. In contrast, a shoulder rubber of the tread is in contact with the ground when turning. Generation of a large reaction force is necessary to change the direction of the motorcycle body. Thus, the responsiveness of the shoulder rubber is desirably increased by enhancing the polymer network in the shoulder rubber.

Presumably, the above-described motorcycle tire has high braking performance upon entering a corner by satisfying the relationship relating to the amount of silica, specifically, the ratio Si(S)/Si(C) of 0.80 or higher and 0.95 or lower. Further, the cornering performance of the motorcycle tire may be enhanced by increasing the responsiveness when turning.

At the same time, the ratio M300(S)/M300(C) is controlled to satisfy the relationship: 1.15 ≤ M300(S)/M300(C) ≤ 1.50, so that the modulus of the shoulder rubbers becomes higher than the modulus of the center rubber. This can facilitate the generation of a large reaction force in the shoulder rubbers, presumably thereby enhancing the cornering performance.

Additionally, deformation of the center rubber caused by the application of the brakes can be more easily transmitted to the shoulder rubbers by the groove on the tread rubber extending on both the center rubber and at least one of the shoulder rubbers. Thus, the shoulder rubbers can fast generate a reaction force upon contacting the ground, presumably thereby enhancing the cornering performance.

Due to the above-described mechanism, the motorcycle tire can obtain improved running performances including braking performance upon entering a corner and cornering performance and therefore can presumably improve running times.

As discussed above, the motorcycle tire can solve the problem (aim) in improving running performances including braking performance upon entering a corner and cornering performance by its structure including a tread portion including a tread rubber that is divided into at least three parts in the tire width direction and having "a ratio Si(S)/Si(C) of 0.80 or higher and 0.95 or lower" and "a ratio M300(S)/M300(C) of 1.15 or higher and 1.50 or lower". In other words, the parameters of "a ratio Si(S)/Si(C) of 0.80 or higher and 0.95 or lower" and "a ratio M300(S)/M300(C) of 1.15 or higher and 1.50 or lower" do not define the problem (aim). The problem herein is to improve running performances including braking performance upon entering a corner and cornering performance. In order to solve the problem, the motorcycle tire has been formulated to satisfy the parameters.

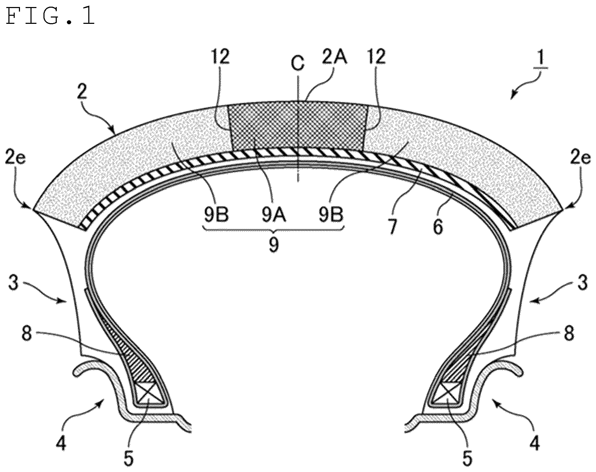

An exemplary motorcycle tire as an embodiment of the motorcycle tire is described below with reference to drawings. Yet, the motorcycle tire is not limited to the embodiment. FIG. 1 is a meridional cross-sectional view of a motorcycle tire according to an embodiment of the motorcycle tire including the rotational axis of the motorcycle tire.

A motorcycle tire 1 includes a carcass 6 extending from a tread portion 2 via a sidewall portion 3 to a bead core 5 of a bead portion 4, and a belt layer 7 disposed outwardly of the carcass 6 and inwardly of the tread portion 2 in the tire radial direction.

In the cross-section, a tread face 2A, which will come in contact with the road surface, of the tread portion 2 extends while curving in an arc shape protruding outwardly in the tire radial direction. Tread edges 2e respectively defining the outer ends of the tread face 2A, as viewed in the tire axial direction, are located on the outermost sides in the tire axial direction.

The tread portion 2 includes a tread rubber 9 located radially outward of the belt layer 7. The tread rubber 9 in this embodiment constitutes a portion from the outer surface of the belt layer 7 to the tread face 2A. The tread rubber 9 of this embodiment includes divided tread portions disposed in the tire width direction. Here, the divided tread parts are formed of two rubber compositions with different formulations.

Specifically, the tread rubber includes a center rubber 9A with its center on a tire equator C and a pair of shoulder rubbers 9B each adjoining the center rubber 9A and extending to the tread edge 2e. In other words, when viewed from the vicinity of the tire equator C towards either widthwise side of the tire, two types of rubbers, i.e., the center rubber 9A and the shoulder rubber 9B are disposed side by side. Although the center rubber 9A and the shoulder rubbers 9B are separated by the normals 12 of the tread face 2A, they may be separated by, for example, border lines extending from the tread face 2A towards the belt layer 7 while inclining outwardly or inwardly in the tire axial direction.

Although this embodiment is described regarding the tread rubber 9 that consists of divided tread parts of two types (center rubber 9A and shoulder rubbers 9B), the number of types of divided tread parts is not limited and may be three or five, for example.

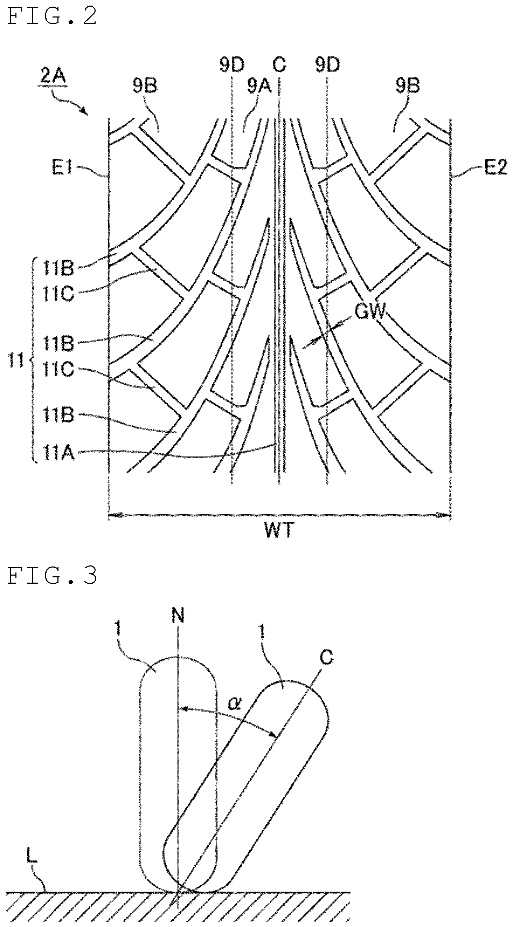

FIG. 2 is a developed plan view showing a tread pattern of a motorcycle tire according to an embodiment. The motorcycle tire has a groove extending on both the center rubber 9A and one of the shoulder rubbers 9B.

Herein, the term "groove extending on both the center rubber 9A and one of the shoulder rubbers 9B" refers to a groove passing through a boundary 9D between the center rubber 9A and one of the shoulder rubbers 9B. The groove extending on both the center rubber 9A and one of the shoulder rubbers 9B is not limited as long as it has a shape passing through the boundary 9D.

In the motorcycle tire 1 in FIG. 2, the tread face 2A has grooves 11. Some of the grooves 11 each extend on both the center rubber 9A and one of the shoulder rubbers 9B.

As shown in FIG. 2, in the motorcycle tire 1, the grooves 11 include a center longitudinal groove 11A extending circumferentially along the tire equator C; beveled grooves 11B which extend symmetrically in an inverted V-like configuration from the vicinity of the tire equator C to either one end edge E1 or the other end edge E2 of the tread portion 2 as an opening end and are disposed side by side in the tire circumferential direction; and bypass grooves 11C each connecting two beveled grooves 11B and 11B adjacent to each other in the circumferential direction.

With the tread face 2A having a tread pattern including these grooves 11, when the tire 1 is in a normal state, i.e., when the tire is mounted on a normal rim J and is applied with a specified normal internal pressure and a specified normal maximum load, the tread 1 coming into contact with a road surface L at a predetermined camber angle α has a ground-contacting area within a predetermined range (not shown). The term "camber angle α" refers to the inclination of the tire equator C with respect to the normal N of the ground contact surface L as shown in FIG. 3.

Herein, the dimensions such as thickness are measured in the normal state. Herein, the term "normal state" refers to a state where the tire is mounted on a normal rim, inflated to a normal internal pressure, and under no load. The term "normal rim" refers to a rim specified for each tire by the standard in a standard system including standards according to which the tire is provided, and may be, for example, "standard rim" with the applicable size listed in "JATMA YEAR BOOK" of The Japan Automobile Tyre Manufacturers Association, Inc. (JATMA), "measuring rim" listed in "Standards Manual" of The European Tyre and Rim Technical Organisation (ETRTO), or "design rim" listed in "YEAR BOOK" of The Tire and Rim Association, Inc. (TRA). Here, JATMA, ETRTO, and TRA will be referenced in that order, and if the referenced standard includes the applicable size, such a referenced standard will be followed. For a tire which is not defined by any of the standards, the normal rim refers to a rim with the smallest diameter and, secondly, the narrowest width among the rims on which the tire can be mounted and can maintain the internal pressure, i.e., the rims that cause no air leakage between the rim and the tire. The term "normal internal pressure" refers to an air pressure specified for each tire by the standard in a standard system including standards according to which the tire is provided, and may be "maximum air pressure" in JATMA, "inflation pressure" in ETRTO, or the maximum value shown in Table "TIRE LOAD LIMITS AT VARIOUS COLD INFLATION PRESSURES" in TRA. JATMA, ETRTO, and TRA will be referenced in that order, and if the referenced standard includes the applicable size, such a referenced standard will be followed. Moreover, for a tire which is not defined by any of the standards, the normal internal pressure refers to a normal internal pressure of 250 kPa or more for another tire size defined by any of the standards, for which the normal rim is listed as the standard rim. Here, when a plurality of normal internal pressures of 250 kPa or more are listed, the normal internal pressure refers to the smallest one of these normal internal pressures.

The grooves 11 desirably have a width GW in the range of 0.04 to 0.12 times a tread width WT. The depth (not shown) of the grooves 11 is desirably in the range of 0.06 to 0.18 times the tread width WT.

The depth of the grooves 11 is preferably 2 mm or more, more preferably 3 mm or more, still more preferably 4 mm or more, while it is preferably 12 mm or less, more preferably 10 mm or less, still more preferably 8 mm or less. When the depth is within the range indicated above, the advantageous effect tends to be better achieved.

A depth G of the groove extending on both the center rubber 9A and one of the shoulder rubbers 9B among the grooves 11 (the depth of a groove passing through the boundary between the center rubber 9A and one of the shoulder rubbers 9B) is preferably 2 mm or more, more preferably 3 mm or more, still more preferably 4 mm or more, while it is preferably 12 mm or less, more preferably 10 mm or less, still more preferably 8 mm or less.

The mechanism of the enhancement of the advantageous effect provided by controlling the depth G of the groove extending on both the center rubber 9A and one of the shoulder rubbers 9B to be 10 mm or less is not clear. Presumably, the groove with such a small depth can increase the rigidity of the tread portion, thereby more easily improving the responsiveness.

Herein, the term "groove depth" refers to a distance in the tire radial direction to the deepest part of the bottom of a groove among grooves that extend in the designed directions and define various tread patterns formed to section the surface of the tread rubber of a vulcanized tire.

The groove depth is measured along the normal of a face that is extended from the ground contact face of the outermost surface of the tread rubber and refers to a distance from the face extended from the ground contact face to the bottom of the deepest groove, specifically, the largest distance among the depths of existing grooves.

The motorcycle tire 1 preferably has a groove 11 that passes through the boundary 9D between the center rubber 9A and one of the shoulder rubbers 9B and does not reach the tire equator C. In the tire 1 in FIG. 2, the grooves 11 include beveled grooves 11B and bypass grooves 11C each connecting two beveled grooves 11B and 11B, and the grooves 11 cross the boundary 9D between the center rubber 9A and one of the shoulder rubbers 9B and do not reach the tire equator C. With such grooves extending from the center rubber to the shoulder rubbers, deformation of the center rubber caused by the application of the brakes is more easily transmitted to the shoulder rubbers. Thus, the shoulder rubbers can fast generate a reaction force upon contacting the ground, presumably thereby enhancing the cornering performance. The grooves also facilitate heat generation in the center rubber and more easily transfer the generated heat to the shoulder rubbers, presumably thereby enhancing braking performance.

### (Chemicals)

Chemicals usable in the center rubber composition in the center rubber and the shoulder rubber composition in the shoulder rubbers are described below.

The center rubber composition and the shoulder rubber composition each contain a rubber component.

Herein, the rubber component contributes to crosslinking and generally corresponds to a polymer component which has a weight average molecular weight (Mw) of 10000 or more and which is not extractable with acetone. The rubber component is solid at 25°C.

The weight average molecular weight of the rubber component is preferably 50000 or more, more preferably 150000 or more, still more preferably 200000 or more, particularly preferably 270000 or more, while it is preferably 2000000 or less, more preferably 1500000 or less, still more preferably 1000000 or less. When the weight average molecular weight is within the range indicated above, the advantageous effect tends to be better achieved.

Herein, the weight average molecular weight (Mw) and the number average molecular weight (Mn) can be determined by gel permeation chromatography (GPC) (GPC-8000 series available from Tosoh Corporation, detector: differential refractometer, column: TSKgel SuperMultipore HZ-M available from Tosoh Corporation) and the determined values are calibrated with polystyrene standards.

The rubber component may be either an unmodified rubber or a modified rubber.

The modified rubber may be a rubber having a functional group interactive with fillers such as silica. Examples include a chain end-modified rubber obtained by modifying at least one chain end of a rubber with a compound (modifier) having the above functional group (i.e., a chain end-modified rubber terminated with the functional group); a backbone-modified rubber having the functional group in the backbone; a backbone- and chain end-modified rubber having the functional group in both the backbone and a chain end (e.g., a backbone- and chain end-modified rubber in which the backbone has the functional group and at least one chain end is modified with the modifier); and a chain end-modified rubber into which a hydroxy or epoxy group has been introduced by modification (coupling) with a polyfunctional compound having two or more epoxy groups in the molecule.

Examples of the functional group include an amino group, an amide group, a silyl group, an alkoxysilyl group, an isocyanate group, an imino group, an imidazole group, a urea group, an ether group, a carbonyl group, an oxycarbonyl group, a mercapto group, a sulfide group, a disulfide group, a sulfonyl group, a sulfinyl group, a thiocarbonyl group, an ammonium group, an imide group, a hydrazo group, an azo group, a diazo group, a carboxyl group, a nitrile group, a pyridyl group, an alkoxy group, a hydroxyl group, an oxy group, and an epoxy group. These functional groups may be substituted. Preferred among these are amino groups (preferably amino groups whose hydrogen atom is replaced with a C1-C6 alkyl group), alkoxy groups (preferably C1-C6 alkoxy groups), and alkoxysilyl groups (preferably C1-C6 alkoxysilyl groups).

Examples of the rubber component include diene-based rubbers. Examples of diene-based rubbers include isoprene-based rubbers, polybutadiene rubber (BR), styrene-butadiene rubber (SBR), styrene-isoprene-butadiene rubber (SIBR), ethylene-propylene-diene rubber (EPDM), chloroprene rubber (CR), and acrylonitrile-butadiene rubber (NBR). Examples of the rubber component also include butyl-based rubbers and fluororubbers. Modified or hydrogenated products of these rubber components are also usable. Extended rubbers extended with oils, resins, liquid rubber components, etc. are usable as well. Each of these may be used alone or in combinations of two or more thereof. The rubber component preferably includes at least one of an isoprene-based rubber, BR, and SBR, more preferably includes SBR among these.

Examples of the isoprene-based rubber include natural rubbers (NR), polyisoprene rubbers (IR), refined NR, modified NR, and modified IR. Examples of NR include those commonly used in the rubber industry such as SIR20, RSS#3, and TSR20. Any IR may be used, including those commonly used in the rubber industry such as IR2200. Examples of refined NR include deproteinized natural rubbers (DPNR) and highly purified natural rubbers. Examples of modified NR include epoxidized natural rubbers (ENR), hydrogenated natural rubbers (HNR), and grafted natural rubbers. Examples of modified IR include epoxidized polyisoprene rubbers, hydrogenated polyisoprene rubbers, and grafted polyisoprene rubbers. Each of these may be used alone, or two or more of these may be used in combination.

Any BR may be used, and examples include high-cis BR having high cis content, BR containing syndiotactic polybutadiene crystals, and BR synthesized using rare earth catalysts (rare earth-catalyzed BR). Each of these may be used alone, or two or more of these may be used in combination. In particular, the BR preferably includes high-cis BR having a cis content of 90% by mass or higher. The cis content is more preferably 95% by mass or higher, still more preferably 98% by mass or higher.

Herein, the cis content can be measured by infrared absorption spectrometry.

When one type of BR is used, the cis content of the BR refers to the cis content of the one BR, while when multiple types of BR are used, it refers to the average cis content.

The average cis content of the BR can be calculated using the formula: {Σ(amount of each BR × cis content of the each BR)}/amount of total BR. For example, when 100% by mass of rubber components include 20% by mass of BR having a cis content of 90% by mass and 10% by mass of BR having a cis content of 40% by mass, the average cis content of the BR is 73.3% by mass (= (20 × 90 + 10 × 40)/(20 + 10)).

The BR may be either unmodified or modified BR. Examples of the modified BR include those into which the functional groups listed for the modified rubbers have been introduced. The BR may also be hydrogenated polybutadiene polymers (hydrogenated BR).

To better achieve the advantageous effect, at least one of the center rubber (center rubber composition) or each shoulder rubber (shoulder rubber composition) desirably contains modified polybutadiene rubber (modified BR) .

The mechanism of the enhancement of the advantageous effect provided by the presence of modified BR in at least one of the center rubber or each shoulder rubber is not clear. Presumably, the presence of the modified BR increases the affinity between the center rubber and the shoulder rubbers during molding, so that the force is more likely to be transmitted at the boundary. Thus, presumably, the reaction force when turning is more likely to be generated.

Usable commercial products of the BR may be available from Ube Corporation, JSR Corporation, Asahi Kasei Corporation, Zeon Corporation, etc.

Any SBR may be used. Examples include emulsion-polymerized styrene-butadiene rubbers (E-SBR) and solution-polymerized styrene-butadiene rubbers (S-SBR). Each of these may be used alone or in combinations of two or more thereof.

The styrene content of the SBR is preferably 5% by mass or higher, more preferably 20% by mass or higher, still more preferably 24% by mass or higher. The styrene content is preferably 60% by mass or lower, more preferably 40% by mass or lower, still more preferably 36% by mass or lower. When the styrene content is within the range indicated above, the advantageous effect tends to be better achieved.

Herein, the styrene content can be measured by ¹H-NMR analysis.

When one type of SBR is used, the styrene content of the SBR refers to the styrene content of the one SBR, while when multiple types of SBR are used, it refers to the average styrene content.

The average styrene content of the SBR can be calculated using the equation: {Σ(amount of each SBR × styrene content of the each SBR)}/amount of total SBR. For example, when 100% by mass of rubber components include 85% by mass of SBR having a styrene content of 40% by mass and 5% by mass of SBR having a styrene content of 25% by mass, the average styrene content of the SBR is 39.2% by mass (= (85 × 40 + 5 × 25)/(85 + 5)).

The vinyl content of the SBR is preferably 3% by mass or higher, more preferably 10% by mass or higher, still more preferably 17% by mass or higher, further preferably 23% by mass or higher. The vinyl content is preferably 50% by mass or lower, more preferably 47% by mass or lower, still more preferably 40% by mass or lower, further preferably 30% by mass or lower. When the vinyl content is within the range indicated above, the advantageous effect tends to be better achieved.

Herein, the vinyl content (1,2-butadiene unit content) can be measured by infrared absorption spectrometry.

The vinyl content (1,2-butadiene unit content) of the SBR refers to the vinyl bond content (unit: % by mass) based on the total mass of the butadiene moieties in the SBR taken as 100. The sum of the vinyl content (% by mass), the cis content (% by mass), and the trans content (% by mass) equals 100 (% by mass). When one type of SBR is used, the vinyl content of the SBR refers to the vinyl content of the one SBR, while when multiple types of SBR are used, it refers to the average vinyl content.

The average vinyl content of the SBR can be calculated using the equation: Σ{amount of each SBR × (100 (% by mass) - styrene content (% by mass) of the each SBR) × vinyl content (% by mass) of the each SBR}/Σ{amount of each SBR × (100 (% by mass) - styrene content (% by mass) of the each SBR)}. For example, when 100 parts by mass of rubber components include 75 parts by mass of SBR having a styrene content of 40% by mass and a vinyl content of 30% by mass, 15 parts by mass of SBR having a styrene content of 25% by mass and a vinyl content of 20% by mass, and the remaining 10 parts by mass of a rubber component other than SBR, the average vinyl content of the SBR is 28% by mass (= {75 × (100 (% by mass) - 40 (% by mass)) × 30 (% by mass) + 15 × (100 (% by mass) - 25 (% by mass)) × 20 (% by mass)}/{75 × (100 (% by mass) - 40 (% by mass)) + 15 × (100 (% by mass) - 25 (% by mass))}.

The SBR may be either unmodified or modified SBR. Examples of the modified SBR include those into which the functional groups listed for the modified rubbers have been introduced. The SBR may also be hydrogenated styrene-butadiene copolymers (hydrogenated SBR).

The SBR may be a SBR product manufactured or sold by Sumitomo Chemical Co., Ltd., JSR Corporation, Asahi Kasei Corporation, Zeon Corporation, etc. or may be SBR synthesized by a known method.

The materials (monomers) of synthetic rubbers such as IR, SBR, and BR may be derived from underground resources such as petroleum or natural gas or may be recycled from rubber products such as tires or non-rubber products such as polystyrene. Non-limiting examples of monomers obtained by recycle (recycled monomers) include isoprene derived from recycled materials, butadiene derived from recycled materials, and aromatic vinyls derived from recycled materials. Examples of the butadiene include 1,2-butadiene and 1,3-butadiene. Non-limiting examples of the aromatic vinyls include styrene. Of these, isoprene derived from recycled materials (recycled isoprene), butadiene derived from recycled materials (recycled butadiene), and /or styrene derived from recycled materials (recycled styrene) are/is preferably used as a raw material.

The recycled monomers may be produced by any method. For example, a recycled monomer may be synthesized from naphtha derived from a recycled material obtained by decomposing a rubber product such as a tire. The naphtha derived from a recycled material may be produced by any method, for example, by decomposing a rubber product such as a tire at a high temperature and a high pressure, by microwave decomposition, or by mechanical grinding and subsequent extraction.

Further, the materials (monomers) of synthetic rubbers such as IR, SBR, and BR may be derived from biomass. Herein, the term "biomass" refers to substances derived from natural resources such as plants. Non-limiting examples of biomass include agricultural, forestry and marine products, sugar, wood chips, plant residues after collecting useful components, plant-derived ethanol, and biomass naphtha.

Non-limiting examples of biomass-derived monomers (biomass monomers) include biomass-derived butadiene and biomass-derived aromatic vinyls. Examples of the butadiene include 1,2-butadiene and 1,3-bitadiene. Examples of the aromatic vinyls include styrene. Biomass monomers may be produced by any method, for example, a method including at least one of biological conversion, chemical conversion, or physical conversion of an animal or a plant. The biological conversion is typically fermentation by microorganisms. The chemical and/or physical conversion can be caused by, for example, a catalyst, a high temperature, a high pressure, electromagnetic waves, a critical liquid, or a combination of these.

Non-limiting examples of polymers (biomass polymers) synthesized using a biomass monomer component include polybutadiene rubbers synthesized using biomass-derived butadiene and aromatic vinyl-butadiene copolymers synthesized using biomass-derived butadiene and/or a biomass-derived aromatic vinyl. Examples of the aromatic vinyl-butadiene copolymer include styrene-butadiene rubber synthesized using biomass-derived butadiene and/or a biomass-derived styrene.

Whether the material of a polymer is derived from biomass can be judged by the percent Modern Carbon (pMC) measured in accordance with ASTM D6866-10.

The term "pMC" refers to the ratio of the ¹⁴C content of a sample to the ¹⁴C content of a modern carbon standard (modern standard reference). This value is used as an index indicative of the biomass ratio of a compound. The following will describe what this value means.

One mole of carbon atoms (6.02 × 10²³ carbon atoms) includes about 6.02 × 10^{11 14}C atoms (about one trillionth of the number of normal carbon atoms). ¹⁴C is called a radioactive isotope and its half-life period is 5730 years and the number thereof regularly decreases. Decay of all the ¹⁴C atoms requires 226000 years. This means that in the fossil fuels, such as coal, petroleum, and natural gas, which are considered to be left for at least 226000 years after carbon dioxide and the like in the air were taken into and fixed in plants, etc., all the ¹⁴C atoms which had been contained in the plants etc. at the beginning of the fixation were decayed. Therefore, in the current 21st century, the fossil fuels, such as coal, petroleum, and natural gas, contain no ¹⁴C atoms. Thus, chemical materials prepared from such fossil fuel raw materials contain no ¹⁴C atoms either.

Meanwhile, ¹⁴C is unceasingly generated by nuclear reaction of cosmic rays in the air, and this generation balances with the ¹⁴C reduction due to radioactive decay. Thus, in the global atmosphere, the amount of ¹⁴C is constant. Then, the ¹⁴C content of materials derived from biomass resources which are circulating in the current environment is about 1 × 10⁻¹² mol% of the total of C atoms as described above. Therefore, a difference in the values can be used to calculate the biomass ratio of a compound.

The amount of ¹⁴C is generally determined as follows. ¹³C content (¹³C/¹²C) and ¹⁴C content (¹⁴C/¹²C) are determined by tandem accelerator-based mass spectrometry. In the determination, the ¹⁴C content of the natural carbon cycle at 1950 is used as a modern standard reference, that is, a standard ¹⁴C content. The particular standard substance used is an oxalic acid standard offered by the National Institute of Standards and Technology (NIST), United States. The specific radioactivity of carbon (intensity of radioactivity of ¹⁴C per gram of carbon) in the oxalic acid is corrected for carbon isotopic fractionation to a certain value for ¹³C, and is then corrected for decay between 1950 AD and the measurement date. This corrected value is taken as the standard ¹⁴C content (100%). The ratio between this value and the actual measurement value of a sample is defined as pMC.

Thus, a rubber 100% produced from materials derived from biomass is expected to have roughly about 110 pMC because, although there are some differences such as regional differences, currently such a material often fails to exhibit a value of 100 in usual conditions. On the other hand, the measured ¹⁴C content of chemical substances derived from fossil fuels, such as petroleum, is expected to be about 0 pMC (for example, 0.3 pMC). This value corresponds to a biomass ratio of 0% mentioned above.

Based on the above discussion, materials such as rubber with a high pMC i.e., materials such as rubber with a high biomass ratio can suitably be used in rubber compositions for environmental protection.

The center rubber composition and the shoulder rubber composition each contain a filler.

The center rubber composition and the shoulder rubber composition each contain silica as a filler.

Non-limiting examples of usable fillers other than silica include materials known in the rubber field, including, for example, inorganic fillers such as carbon black, calcium carbonate, talc, alumina, clay, aluminum hydroxide, aluminum oxide, and mica; bio char; and hard-to-disperse fillers. To better achieve the advantageous effect, carbon black is preferred among these.

Non-limiting examples of silica usable in the center rubber composition or the shoulder rubber composition include silica usually used in the tire industry, such as silica (anhydrous silica) prepared by a dry process and silica (hydrous silica) prepared by a wet process. The raw material of the silica is not limited and may be a raw material derived from minerals such as quartz or a raw material derived from a biological resource such as husks (for example, silica made from a biomass material such as husks). The silica may be silica recycled from a silica-containing product. Preferred among these are hydrous silica prepared by a wet process because it has a large number of silanol groups. The silica may be used alone or two or more types of the silica may be used in combination.

The silica made from a biomass material can be obtained by, for example, extracting a silicate using a sodium hydroxide solution from husk ash that is obtained by burning husks, subsequently, as in production of conventional wet silica, reacting the silicate with sulfuric acid to precipitate silicon dioxide, and then subjecting the precipitated silicon dioxide to filtration, water washing, drying, and grinding.

The silica recycled from a silica-containing product may be silica recovered from a silica-containing product such as an electronic component of a semiconductor, a tire, a drying agent, or a filtering material such as diatomite. Non-limiting examples of the recovering method include thermal decomposition and decomposition by electromagnetic waves. Preferred among these is silica recovered from an electronic component of a semiconductor or a tire.

Since crystalline silica does not dissolve in water, silicic acid as a component thereof cannot be utilized. Crystallization of silica in husk ash can be suppressed by controlling the burning temperature and burning time (see JP 2009-2594 A, Akita Prefectural University Web Journal B/2019, vol.6, pp.216-222, etc.).

Amorphous silica extracted from husks may be commercially available from Wilmar, etc.

The nitrogen adsorption specific surface area (N₂SA) of the silica is preferably 50 m²/g or more, more preferably 100 m²/g or more, still more preferably 150 m²/g or more, further preferably 175 m²/g or more. The upper limit of the N₂SA of the silica is not limited, and it is preferably 350 m²/g or less, more preferably 300 m²/g or less, still more preferably 250 m²/g or less. When the N₂SA is within the range indicated above, the advantageous effect tends to be better achieved.

Here, the N₂SA of the silica is measured by a BET method in accordance with ASTM D3037-93.

The center rubber composition and the shoulder rubber composition each preferably further contain a silane coupling agent.

Any silane coupling agent may be used, and those known in the rubber field are usable. Examples include sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyltetrasulfide, 2-triethoxysilylethyl-N,N-dimethylthiocarbamoyltetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z both available from Momentive; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. Usable commercial products are available from Degussa, Momentive, Shin-Etsu Silicone, Tokyo Chemical Industry Co., Ltd., AZmax. Co., Dow Corning Toray Co., Ltd., etc. Each of these may be used alone, or two or more of these may be used in combination.

Non-limiting examples of carbon black usable in the center rubber composition and the shoulder rubber composition include N134, N110, N220, N234, N219, N339, N330, N326, N351, N550, and N762. The material of the carbon black may be a biomass material such as lignin or a plant oil. The carbon black may be produced through combustion, for example, by the furnace method, through hydrothermal carbonization (HTC), or through thermal decomposition of methane, for example, by thermal black method. Usable commercial products are available from Asahi Carbon Co., Ltd., Cabot Japan K.K., Tokai Carbon Co., Ltd., Mitsubishi Chemical Corporation, Lion Corporation, NSCC Carbon Co., Ltd., Columbia Carbon, etc. Each of these may be used alone, or two or more of these may be used in combination.

The nitrogen adsorption specific surface area (N₂SA) of the carbon black is preferably 80 m²/g or more, more preferably 120 m²/g or more, still more preferably 140 m²/g or more, further preferably 142 m²/g or more. The N₂SA is preferably 300 m²/g or less, more preferably 250 m²/g or less, still more preferably 200 m²/g or less. When the N₂SA is within the range indicated above, the advantageous effect tends to be better achieved.

Herein, the nitrogen adsorption specific surface area of the carbon black may be determined in accordance with JIS K 6217-2:2001.

Examples of hard-to-disperse fillers include microfibrillated plant fibers, short fibrous celluloses, and gel compounds. Microfibrillated plant fibers are preferred among these.

To obtain good reinforcement, cellulose microfibrils are preferred among the microfibrillated plant fibers. Any cellulose microfibril derived from natural products may be used. Examples include those derived from resource biomass such as fruits, grains, and root vegetables; wood, bamboo, hemp, jute, and kenaf, and pulp, paper, or cloth produced therefrom; waste biomass such as agricultural waste, food waste, and sewage sludge; unused biomass such as rice straw, wheat straw, and thinnings; and celluloses produced by ascidians, acetic acid bacteria, or other organisms. Each of these microfibrillated plant fibers may be used alone, or two or more of these may be used in combination.

Herein, the term "cellulose microfibrils" typically refers to cellulose fibers having an average fiber diameter of not more than 10 µm, more typically cellulose fibers having a microstructure with an average fiber diameter of not more than 500 nm formed by aggregation of cellulose molecules. For example, typical cellulose microfibrils may be formed as aggregates of cellulose fibers having an average fiber diameter indicated above.

The center rubber composition and the shoulder rubber composition each desirably contain a plasticizer.

Herein, the term "plasticizer" refers to a material that imparts plasticity to rubber components and conceptually includes both liquid plasticizers that are liquid at 25°C and solid plasticizers that are solid at 25°C. Examples of the plasticizer include resin components, oils, liquid polymers, and ester plasticizers. These plasticizers may be derived from mineral resources such as petroleum or natural gas, from biomass, or from naphtha recycled from rubber products or non-rubber products. Usable plasticizers also include low molecular weight hydrocarbon components obtained by subjecting used tires or products containing various components to pyrolysis and extraction. Each of these plasticizers may be used alone, or two or more of these may be used in combination.

Specific examples of the plasticizer include oils, liquid polymers, and resins. Each of these may be used alone, or two or more of these may be used in combination.

Examples of the oils include mineral oils, plant oils, and animal oils. In view of life cycle assessment, oils obtained by purifying waste oils used in rubber mixing machines or engines or waste cooking oils used in cooking establishments may be used.

Herein, the term "mineral oils" refers to oils derived from mineral resources such as petroleum or natural gas. Examples of mineral oils include paraffinic process oils (mineral oils), naphthenic process oils, and aromatic process oils. Specific examples of mineral oils include mild extracted solvates (MES), distillate aromatic extracts (DAE), treated distillate aromatic extracts (TDAE), treated residual aromatic extracts (TRAE), and residual aromatic extracts (RAE). For environmental protection, oils with a low polycyclic aromatic compound (PCA) content may be used. Examples of the oils with a low PCA content include MES, TDAE, and heavy naphthenic oils.

Herein, examples of plant oils include linseed oil, rapeseed oil, safflower oil, soybean oil, corn oil, cotton seed oil, rice oil, tall oil, sesame oil, perilla oil, castor oil, tung oil, pine oil, pine tar oil, sunflower oil, coconut oil, palm oil, palm kernel oil, olive oil, camellia oil, jojoba oil, macadamia nut oil, peanut oil, grape seed oil, and Japan tallow. Examples of plant oils also include refined oils (e.g., salad oil) produced by refining the above-mentioned oils, esterified oils produced by esterifying the above-mentioned oils, hardened oils produced by hydrogenation of the above-mentioned oils, thermally polymerized oils produced by thermal polymerization of the above-mentioned oils, oxidized polymerized oils produced by oxidizing the above-mentioned oils, and waste edible oils recovered from used edible oils or the like. The plant oils may be liquid or solid at 25°C. Each of these plant oils may be used alone, or two or more of these may be used in combination.

The plant oils according to the present embodiments each preferably contain acylglycerol and more preferably contain triacylglycerol. Herein, the term "acylglycerol" refers to a compound in which hydroxy groups of glycerol are ester-bonded to a fatty acid. Non-limiting examples of the acylglycerol include 1-monoacylglycerol, 2-monoacylglycerol, 1,2-diacylglycerol, 1,3-diacylglycerol, and triacylglycerol. Moreover, the acylglycerol may be a monomer, a dimer, or a trimer or higher multimer. A dimer or higher multimer acylglycerol may be obtained by thermal polymerization or oxidation polymerization, for example. The acylglycerol may be liquid or solid at 25°C.

Whether a rubber composition contains the acylglycerol may be examined by any method such as ¹H-NMR analysis. For example, a rubber composition containing triacylglycerol is immersed in deuterium chloroform at 25°C for 24 hours. After removing the rubber composition, the ¹H-NMR is measured at room temperature. Signals observed at around 5.26 ppm, around 4.28 ppm, and around 4.15 ppm, each referenced to the signal of tetramethylsilane (TMS) taken as 0.00 ppm, are assumed as the signals of hydrogen atoms bound to carbon atoms adjacent to the oxygen atoms of ester groups. The term "around" in this paragraph refers to a range of ± 0.10 ppm.

The fatty acid is not limited and may be an unsaturated fatty acid or a saturated fatty acid. Examples of the unsaturated fatty acid include monounsaturated fatty acids such as oleic acid and polyunsaturated fatty acids such as linoleic acid and linolenic acid. Examples of the saturated fatty acid include butyric acid and lauric acid.

Of these fatty acids, fatty acids with few double bonds, specifically saturated fatty acids or monounsaturated fatty acids are desirable, and oleic acid is preferred. Examples of usable plant oils containing such fatty acids include plant oils containing saturated fatty acids or monounsaturated fatty acids and plant oils modified by transesterification or the like. Plants may be improved by breed improvement, genetic modification, genome editing, etc. to produce plant oils containing such fatty acids.

Usable commercial oils may be available from Idemitsu Kosan Co., Ltd., Sankyo Yuka Kogyo K.K., ENEOS Corporation, Olisoy, H&R, Hokoku Corporation, Fuji Kosan Co., Ltd., Nisshin Oillio Group, etc.

Examples of the liquid polymers include liquid diene polymers (liquid rubbers) and liquid farnesene polymers, all of that are liquid at 25°C. Examples of liquid rubbers include liquid styrene-butadiene copolymers (liquid SBR), liquid butadiene polymers (liquid BR), liquid isoprene polymers (liquid IR), liquid styrene-isoprene copolymers (liquid SIR), liquid styrene-butadiene-styrene block copolymers (liquid SBS block polymers), and liquid styrene-isoprene-styrene block copolymers (liquid SIS block polymers). A chain end or the backbone of these may be modified with a polar group. Hydrogenated products of these are also usable.

The weight average molecular weight (Mw) of the liquid diene polymers is preferably 1.0 × 10³ to 5.0 × 10⁴, more preferably 3.0 × 10³ to 1.5 × 10⁴ as measured by gel permeation chromatography (GPC) and calibrated with polystyrene standards. The lower limit of the Mw of the liquid diene polymers may be 4500 or 8500, and the upper limit may be 4500 or 8500.

Herein, the Mw of the liquid diene polymers is measured by gel permeation chromatography (GPC) and calibrated with polystyrene standards.

Usable liquid diene polymers may be commercially available from Sartomer, Kraray, etc.

The resins may be resins that are usually used as additives for tires. They may be either liquid or solid at room temperature (25°C). Examples include aromatic vinyl polymers, coumarone-indene resins, coumarone resins, indene resins, phenol resins, rosin resins, petroleum resins, terpene resins, and acrylic resins. The resins may be those hydrogenated (hydrogenated resins). Each of these may be used alone, or two or more of these may be used in combination. The resins themselves may be copolymers of different monomers. Of these, aromatic vinyl polymers, petroleum resins, terpene resins, and hydrogenated products of these polymers and resins are desirable, and aromatic vinyl polymers and hydrogenated products thereof are more desirable.

The softening point of the resins that are solid at 25°C, if used, is preferably 50°C or higher, more preferably 55°C or higher, still more preferably 60°C or higher, particularly preferably 85°C or higher, while it is preferably 160°C or lower, more preferably 150°C or lower, still more preferably 140°C or lower, particularly preferably 100°C or lower. When the softening point is within the range indicated above, the advantageous effect tends to be better achieved.

The softening point of the resins that are liquid at 25°C is preferably 20°C or lower, 10°C or lower, or 0°C or lower.

Hydrogenated resins desirably have a softening point within the range indicated above.

The softening point of the resins is determined in accordance with JIS K 6220-1:2001 using a ring and ball softening point measuring apparatus. The temperature at which the ball drops down is defined as the softening point.

The aromatic vinyl polymers refer to polymers containing aromatic vinyl monomers as structural units. Examples include resins produced by polymerization of α-methylstyrene and/or styrene. Specific examples include styrene homopolymers (styrene resins), α-methylstyrene homopolymers (α-methylstyrene resins), copolymers of α-methylstyrene and styrene, and copolymers of styrene and other monomers.

The coumarone-indene resins refer to resins containing coumarone and indene as the main monomer components forming the skeleton (backbone) of the resins. Examples of monomer components which may be contained in the skeleton in addition to coumarone and indene include styrene, α-methylstyrene, methylindene, and vinyltoluene.

The coumarone resins refer to resins containing coumarone as the main monomer component forming the skeleton (backbone) of the resins.

The indene resins refer to resins containing indene as the main monomer component forming the skeleton (backbone) of the resins.

Examples of the phenol resins include known polymers produced by reacting phenol with an aldehyde such as formaldehyde, acetaldehyde, or furfural in the presence of an acid or alkali catalyst. Preferred among these are those produced by reacting them in the presence of an acid catalyst, such as novolac phenol resins.

Examples of the rosin resins include rosin resins typified by natural rosins, polymerized rosins, modified rosins, and esterified compounds thereof, and hydrogenated products thereof.

Examples of the petroleum resins include C5 resins, C9 resins, C5/C9 resins, dicyclopentadiene (DCPD) resins, C9/DCPD resins, and hydrogenated products of these resins. DCPD resins, hydrogenated DCPD resins, C9/DCPD resins, and C9/hydrogenated DCPD resins are preferred among these.

The terpene resins refer to polymers containing terpene as structural units. Examples include polyterpene resins produced by polymerizing terpene compounds and aromatic modified terpene resins produced by polymerizing terpene compounds and aromatic compounds. Examples of usable aromatic modified terpene resins include terpene-phenol resins made from the terpene compounds and phenolic compounds, terpene-styrene resins made from the terpene compounds and styrene compounds, and terpene-phenol-styrene resins made from the terpene compounds, phenolic compounds, and styrene compounds. Examples of the terpene compounds include α-pinene and β-pinene. Examples of the phenolic compounds include phenol and bisphenol A. Examples of the aromatic compounds include styrene compounds such as styrene and α-methylstyrene. Aromatic modified terpene resins are preferred among these.

The acrylic resins refer to polymers containing acrylic monomers as structural units. Examples include styrene acrylic resins such as those which contain carboxy groups and are produced by copolymerization of aromatic vinyl monomer components and acrylic monomer components. Solvent-free, carboxy group-containing styrene acrylic resins are suitably usable among these.

The resins may be commercially available from, for example, Maruzen Petrochemical Co., Ltd., Sumitomo Bakelite Co., Ltd., Yasuhara Chemical Co., Ltd., Tosoh Corporation, Rutgers Chemicals, BASF, Arizona Chemical, ExxonMobil, KRATON, Nitto Chemical Co., Ltd., Nippon Shokubai Co., Ltd., ENEOS Corporation, Arakawa Chemical Industries, Ltd., Taoka Chemical Co., Ltd., etc.

Desirable plasticizers in view of sustainability are plant-derived plasticizers such as the plant-derived oils and farnesene polymers.

The term "farnesene polymer" refers to a polymer that is produced by polymerizing farnesene and contains a farnesene-based structural unit. Farnesene has isomers such as α-farnesene ((3E,7E)-3,7,11-trimethyl-1,3,6,10-dodecatetraene) and β-farnesene (7,11-dimethyl-3-methylene-1,6,10-dodecatriene). Preferred is (E)-β-farnesene having the following structure:

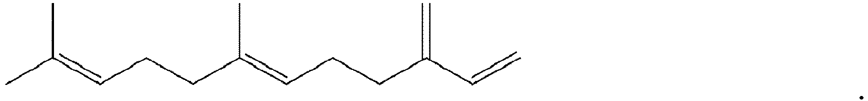

The farnesene polymers may be either homopolymers of farnesene (farnesene homopolymers) or copolymers of farnesene and vinyl monomers (farnesene-vinyl monomer copolymers). Each of these may be used alone, or two or more of these may be used in combination. Copolymers of farnesene and vinyl monomers are preferred among these.

Examples of the vinyl monomers include aromatic vinyl compounds such as styrene, 2-methylstyrene, 3-methylstyrene, 4-methylstyrene, α-methylstyrene, 2,4-dimethylstyrene, 2,4-diisopropylstyrene, 4-tert-butylstyrene, 5-t-butyl-2-methylstyrene, vinylethylbenzene, divinylbenzene, trivinylbenzene, divinylnaphthalene, tert-butoxystyrene, vinylbenzyldimethylamine, (4-vinylbenzyl)dimethylaminoethyl ether, N,N-dimethylaminoethylstyrene, N,N-dimethylaminomethylstyrene, 2-ethylstyrene, 3-ethylstyrene, 4-ethylstyrene, 2-t-butylstyrene, 3-t-butylstyrene, 4-t-butylstyrene, vinylxylene, vinylnaphthalene, vinyltoluene, vinylpyridine, diphenylethylene, and tertiary amino group-containing diphenylethylenes, and conjugated diene compounds such as butadiene and isoprene. Each of these may be used alone, or two or more of these may be used in combination. Butadiene is preferred among these. In other words, copolymers of farnesene and butadiene (farnesene-butadiene copolymers) are preferred among the farnesene-vinyl monomer copolymers.

The copolymerization ratio of farnesene and vinyl monomers (farnesene/vinyl monomers) of the farnesene-vinyl monomer copolymers is preferably 40/60 to 90/10 by mass.

Farnesene polymers having a weight average molecular weight (Mw) of 3000 or more and 300000 or less may be suitably used. The Mw of the farnesene polymers is preferably 8000 or more, more preferably 10000 or more, while it is preferably 100000 or less, more preferably 60000 or less, still more preferably 50000 or less. When the weight average molecular weight is within the range indicated above, the advantageous effect tends to be better achieved.

Farnesene polymers which are either liquid or solid at 25°C may be used. Of these, liquid farnesene polymers that are liquid at 25°C are desirable.

The center rubber composition and the shoulder rubber composition each may further contain vulcanized rubber particles.

The term "vulcanized rubber particles" refers to particles made of vulcanized rubber. Specific examples of usable vulcanized rubber particles include rubber powder stipulated in JIS K 6316:2017. From the perspective of environmental considerations and cost, recycled rubber powder produced from pulverized waste tires or the like is preferred. Each of these may be used alone, or two or more of these may be used in combination.

The vulcanized rubber particles are not limited and may be unmodified vulcanized rubber particles or modified vulcanized rubber particles.

Examples of usable commercial products of vulcanized rubber particles include those available from Lehigh, Muraoka Rubber Reclaiming Co., Ltd, etc.

The amount of vulcanized rubber particles per 100 parts by mass of the rubber component in the center rubber composition or the shoulder rubber composition is preferably 5 parts by mass or more, more preferably 7 parts by mass or more, still more preferably 10 parts by mass or more, while it is preferably 30 parts by mass or less, more preferably 20 parts by mass or less, still more preferably 15 parts by mass or less. When the amount is within the range indicated above, the advantageous effect tends to be better achieved.

In view of crack resistance, ozone resistance, etc., the center rubber composition and the shoulder rubber composition each preferably contain an antioxidant.

Non-limiting examples of the antioxidant include naphthylamine antioxidants such as phenyl-α-naphthylamine; diphenylamine antioxidants such as octylated diphenylamine and 4,4'-bis(α,α'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine (6PPD), N,N'-bis(1,4-dimethylpentyl)-p-phenylenediamine (77PD), N,N'-diphenyl-p-phenylenediamine (DPPD), N,N'-ditolyl-p-phenylenediamine (DTPD), N-isopropyl-N'-phenyl-p-phenylenediamine (IPPD), and N,N'-di-2-naphthyl-p-phenylenediamine (DNPD); quinoline antioxidants such as polymerized 2,2,4-trimethyl-1,2-dihydroquinoline; monophenolic antioxidants such as 2,6-dit-butyl-4-methylphenol and styrenated phenol; and bis-, tris-, or polyphenolic antioxidants such as tetrakis[methylene-3-(3',5'-di-t-butyl-4'-hydroxyphenyl)propionate]methane. Preferred among these are p-phenylenediamine antioxidants and quinoline antioxidants, with N-(1,3-dimethylbutyl)-N'-phenyl-p-phenylenediamine or polymerized 2,2,4-trimethyl-1,2-dihydroquinoline being more preferred. Usable commercial products are available from Seiko Chemical Co., Ltd., Sumitomo Chemical Co., Ltd., Ouchi Shinko Chemical Industrial Co., Ltd., Flexsys, etc.

The center rubber composition and the shoulder rubber composition each preferably contain stearic acid.

Here, conventionally known stearic acid may be used, including, for example, those available from NOF Corporation, Kao Corporation, FUJIFILM Wako Pure Chemical Corporation, Chiba Fatty Acid Co., Ltd., etc.

The center rubber composition and the shoulder rubber composition each preferably contain zinc oxide.

Conventionally known zinc oxide may be used, including, for example, those available from Mitsui Mining & Smelting Co., Ltd., Toho Zinc Co., Ltd., HakusuiTech Co., Ltd., Seido Chemical Industry Co., Ltd., Sakai Chemical Industry Co., Ltd., etc.

The center rubber composition and the shoulder rubber composition each may contain wax.

The wax is not limited. Any wax usually used in the tire industry may be suitably used. Examples include mineral wax and plant-derived wax. The term "mineral wax" refers to wax derived from mineral resources such as petroleum or natural gas. The term "plant-derived wax" refers to wax derived from natural resources such as plants. Mineral wax is preferred among these. Examples of plant-derived wax include rice wax, carnauba wax, and candelilla wax. Examples of mineral wax include paraffin wax and microcrystalline wax as well as selected special wax thereof. Paraffin wax is preferred. According to the present embodiments, wax does not include stearic acid. Usable commercial products of wax are available from Ouchi Shinko Chemical Industrial Co., Ltd., Nippon Seiro Co., Ltd., Paramelt, etc. Each wax may be used alone, or two or more of these may be used in combination.

The center rubber composition and the shoulder rubber composition each preferably contain sulfur as a crosslinking agent in order to moderately crosslink the polymer chains to obtain good properties.

Examples of sulfur include those commonly used in the rubber industry, such as powdered sulfur, precipitated sulfur, colloidal sulfur, insoluble sulfur, highly dispersible sulfur, and soluble sulfur. Usable commercial products are available from Tsurumi Chemical Industry Co., Ltd., Karuizawa sulfur Co., Ltd., Shikoku Chemicals Corporation, Flexsys, Nippon Kanryu Industry Co., Ltd., Hosoi Chemical Industry Co., Ltd., etc. Each of these may be used alone, or two or more of these may be used in combination.

The center rubber composition and the shoulder rubber composition each preferably contain a vulcanization accelerator.

Any type of vulcanization accelerator may be used, including those generally used. Examples of vulcanization accelerators include benzothiazole vulcanization accelerators such as 2-mercaptobenzothiazole, di-2-benzothiazolyl disulfide, and N-cyclohexyl-2-benzothiazylsulfenamide; thiuram vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide vulcanization accelerators such as N-cyclohexyl-2-benzothiazole sulfenamide, N-t-butyl-2-benzothiazolylsulfenamide, N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. Each of these may be used alone, or two or more of these may be used in combination. Of these, sulfenamide vulcanization accelerators, guanidine vulcanization accelerators, and benzothiazole vulcanization accelerators are preferred.

In addition to the above-described components, the center rubber composition and the shoulder rubber composition may each contain agents usually used in the tire industry, for example, materials such as a releasing agent.

Herein, various materials containing carbon atoms (for example, rubbers, oils, resins, vulcanization accelerators, antioxidants, surfactants, etc.) may be derived from carbon dioxide in the air. The materials may be obtained from carbon dioxide by directly converting carbon dioxide or by synthesizing methane from carbon dioxide through methanation and then converting the methane.

In the motorcycle tire, the amount Si(S) of the silica in the shoulder rubbers (the amount of the silica in the shoulder rubber composition) and the amount Si(C) of the silica in the center rubber (the amount of the silica in the center rubber composition) give a ratio (Si(S)/Si(C)) of 0.80 or higher and 0.95 or lower.

The ratio Si(S)/Si(C) is preferably 0.83 or higher, more preferably 0.85 or higher, still more preferably 0.88 or higher, further preferably 0.90 or higher. The upper limit is preferably 0.94 or lower, more preferably 0.93 or lower, still more preferably 0.92 or lower. When the ratio Si(S)/Si(C) is within the range indicated above, the advantageous effect tends to be better achieved.

### [Center rubber (center rubber composition)]

The center rubber composition in the center rubber preferably contains the SBR as a rubber component.

In the center rubber composition, the amount of the SBR based on 100% by mass of the rubber component is preferably 70% by mass or more, more preferably 80% by mass or more, still more preferably 90% by mass or more, and may be 100% by mass. When the amount is within the range indicated above, the advantageous effect tends to be better achieved.

The amount of BR, if present, based on 100% by mass of the rubber component in the center rubber composition is preferably 5% by mass or more, more preferably 10% by mass or more, still more preferably 15% by mass or more, while it is preferably 50% by mass or less, more preferably 45% by mass or less, still more preferably 40% by mass or less. When the amount is within the range indicated above, the advantageous effect tends to be better achieved.

The amount of an isoprene-based rubber, if present, based on 100% by mass of the rubber component in the center rubber composition is preferably 3% by mass or more, more preferably 5% by mass or more, still more preferably 7% by mass or more, while it is preferably 20% by mass or less, more preferably 15% by mass or less, still more preferably 10% by mass or less. When the amount is within the range indicated above, the advantageous effect tends to be better achieved.

The amount of the silica per 100 parts by mass of the rubber component in the center rubber composition is 70 parts by mass or more, preferably 80 parts by mass or more, more preferably 90 parts by mass or more, still more preferably 100 parts by mass or more. The upper limit is preferably 200 parts by mass or less, more preferably 150 parts by mass or less, still more preferably 120 parts by mass or less. When the amount is within the range indicated above, the advantageous effect tends to be better achieved.

The amount of the carbon black per 100 parts by mass of the rubber component in the center rubber composition is preferably 3 parts by mass or more, more preferably 5 parts by mass or more, still more preferably 7 parts by mass or more, while it is preferably 30 parts by mass or less, more preferably 20 parts by mass or less, still more preferably 10 parts by mass or less. When the amount is within the range indicated above, the advantageous effect tends to be better achieved.

The amount of the filler (total amount of fillers such as carbon black and silica) per 100 parts by mass of the rubber component in the center rubber composition is preferably 80 parts by mass or more, more preferably 100 parts by mass or more, still more preferably 110 parts by mass or more. The upper limit is preferably 200 parts by mass or less, more preferably 160 parts by mass or less, still more preferably 130 parts by mass or less. When the amount is within the range indicated above, the advantageous effect tends to be better achieved.

The amount of the silane coupling agent per 100 parts by mass of the silica in the center rubber composition is preferably 0.1 parts by mass or more, more preferably 3 parts by mass or more, still more preferably 5 parts by mass or more, particularly preferably 7 parts by mass or more. The upper limit of The amount is preferably 50 parts by mass or less, more preferably 20 parts by mass or less, still more preferably 15 parts by mass or less, particularly preferably 10 parts by mass or less. When the amount is within the range indicated above, the advantageous effect tends to be better achieved.

The amount of the plasticizer (total amount of plasticizers) per 100 parts by mass of the rubber component in the center rubber composition is preferably 2 parts by mass or more, more preferably 35 parts by mass or more, still more preferably 38 parts by mass or more, further preferably 53 parts by mass or more. The upper limit is preferably 123 parts by mass or less, more preferably 93 parts by mass or less, still more preferably 76 parts by mass or less, further preferably 73 parts by mass or less. When the amount is within the range indicated above, the advantageous effect tends to be better achieved.

The amount of the plasticizer includes the amounts of oils and resins in the oil-extended rubbers and resin-extended rubbers.

The amount of the solid plasticizers that are solid at 25°C per 100 parts by mass of the rubber component in the center rubber composition is preferably 1 part by mass or more, more preferably 3 parts by mass or more, still more preferably 5 parts by mass or more. The upper limit is preferably 20 parts by mass or less, more preferably 15 parts by mass or less, still more preferably 10 parts by mass or less. When the amount is within the range indicated above, the advantageous effect tends to be better achieved.

The amount of the resins that are solid at 25°C per 100 parts by mass of the rubber component in the center rubber composition is preferably 1 part by mass or more, more preferably 3 parts by mass or more, still more preferably 5 parts by mass or more. The upper limit is preferably 20 parts by mass or less, more preferably 15 parts by mass or less, still more preferably 10 parts by mass or less. When the amount is within the range indicated above, the advantageous effect tends to be better achieved.

The amount of the liquid plasticizers that are liquid at 25°C per 100 parts by mass of the rubber component in the center rubber composition is preferably 10 parts by mass or more, more preferably 30 parts by mass or more, still more preferably 33 parts by mass or more, further preferably 48 parts by mass or more. The upper limit is preferably 118 parts by mass or less, more preferably 88 parts by mass or less, still more preferably 71 parts by mass or less, further preferably 68 parts by mass or less. When the amount is within the range indicated above, the advantageous effect tends to be better achieved.

The amount of the liquid plasticizer includes the amount of oils in oil-extended rubbers and the amount of liquid resins in resin-extended rubbers extended with liquid resins.

The amount of the oils per 100 parts by mass of the rubber component in the center rubber composition is preferably 10 parts by mass or more, more preferably 30 parts by mass or more, still more preferably 33 parts by mass or more, further preferably 48 parts by mass or more. The upper limit is preferably 118 parts by mass or less, more preferably 88 parts by mass or less, still more preferably 71 parts by mass or less, further preferably 68 parts by mass or less. When the amount is within the range indicated above, the advantageous effect tends to be better achieved.

The amount of the oils includes the amount of oils in oil-extended rubbers.

The amount of the antioxidant per 100 parts by mass of the rubber component in the center rubber composition is preferably 0.2 parts by mass or more, more preferably 1.0 parts by mass or more, still more preferably 2.0 parts by mass or more, further preferably 3.4 parts by mass or more. The amount is preferably 10.0 parts by mass or less, more preferably 6.0 parts by mass or less.

The amount of the stearic acid per 100 parts by mass of the rubber component in the center rubber composition is preferably 0.5 parts by mass or more, more preferably 1.5 parts by mass or more, still more preferably 2.0 parts by mass or more, further preferably 2.5 parts by mass or more, while it is preferably 10 parts by mass or less, more preferably 5 parts by mass or less.

The amount of the zinc oxide per 100 parts by mass of the rubber component in the center rubber composition is preferably 0.5 parts by mass or more, more preferably 1.5 parts by mass or more, still more preferably 2.0 parts by mass or more, further preferably 2.5 parts by mass or more, while it is preferably 6.0 parts by mass or less, more preferably 4.0 parts by mass or less.

The amount of the wax per 100 parts by mass of the rubber component in the center rubber composition is preferably 0.5 parts by mass or more, more preferably 1.0 parts by mass or more, still more preferably 1.6 parts by mass or more, while it is preferably 8.0 parts by mass or less, more preferably 5.0 parts by mass or less.

The amount of the sulfur per 100 parts by mass of the rubber component in the center rubber composition is preferably 1.0 parts by mass or more, more preferably 1.5 parts by mass or more, still more preferably 1.8 parts by mass or more, further preferably 2.0 parts by mass or more. The amount of the sulfur is preferably 5.0 parts by mass or less, more preferably 4.0 parts by mass or less, still more preferably 2.2 parts by mass or less. When the amount is within the range indicated above, the advantageous effect tends to be better achieved.

The amount of the vulcanization accelerator in the center rubber composition is not limited and may be freely determined according to the desired curing rate and cross-link density. Still, the amount per 100 parts by mass of the rubber component is preferably 0.5 parts by mass or more, more preferably 1.0 parts by mass or more, still more preferably 1.4 parts by mass or more, further preferably 2.6 parts by mass or more, further preferably 3.0 parts by mass or more. The upper limit is preferably 8.0 parts by mass or less, more preferably 6.0 parts by mass or less, still more preferably 5.0 parts by mass or less, further preferably 3.2 parts by mass or less.

### [Shoulder rubber (shoulder rubber composition)]

The shoulder rubber composition in the shoulder rubbers preferably contains the SBR as a rubber component.

In the shoulder rubber composition, the amount of the SBR based on 100% by mass of the rubber component is preferably 70% by mass or more, more preferably 80% by mass or more, still more preferably 90% by mass or more, and may be 100% by mass. When the amount is within the range indicated above, the advantageous effect tends to be better achieved.

The mechanism of the enhancement of the advantageous effect provided by the presence of 70% by mass or more of SBR in the shoulder rubbers is not clear. Presumably, the predetermined amount of SBR leads to formation of styrene domains in the system, and the styrene portions facilitate the transmission of the force. Thus, presumably, the reaction force is more likely to be generated in the shoulder rubbers.

The amount of BR, if present, based on 100% by mass of the rubber component in the shoulder rubber composition is preferably 3% by mass or more, more preferably 5% by mass or more, still more preferably 7% by mass or more, while it is preferably 20% by mass or less, more preferably 15% by mass or less, still more preferably 10% by mass or less. When the amount is within the range indicated above, the advantageous effect tends to be better achieved.

The amount of an isoprene-based rubber, if present, based on 100% by mass of the rubber component in the shoulder rubber composition is preferably 3% by mass or more, more preferably 5% by mass or more, still more preferably 7% by mass or more, while it is preferably 20% by mass or less, more preferably 15% by mass or less, still more preferably 10% by mass or less. When the amount is within the range indicated above, the advantageous effect tends to be better achieved.

The amount of the silica per 100 parts by mass of the rubber component in the shoulder rubber composition is 70 parts by mass or more, preferably 80 parts by mass or more, more preferably 85 parts by mass or more, still more preferably 90 parts by mass or more. The upper limit is preferably 180 parts by mass or less, more preferably 150 parts by mass or less, still more preferably 120 parts by mass or less, further preferably 100 parts by mass or less. When the amount is within the range indicated above, the advantageous effect tends to be better achieved.

The amount of the carbon black per 100 parts by mass of the rubber component in the shoulder rubber composition is preferably 3 parts by mass or more, more preferably 5 parts by mass or more, still more preferably 7 parts by mass or more, while it is preferably 30 parts by mass or less, more preferably 20 parts by mass or less, still more preferably 10 parts by mass or less. When the amount is within the range indicated above, the advantageous effect tends to be better achieved.

The amount of the filler (total amount of fillers such as carbon black and silica) per 100 parts by mass of the rubber component in the shoulder rubber composition is preferably 80 parts by mass or more, more preferably 85 parts by mass or more, still more preferably 90 parts by mass or more, further preferably 100 parts by mass or more. The upper limit is preferably 180 parts by mass or less, more preferably 140 parts by mass or less, still more preferably 110 parts by mass or less. When the amount is within the range indicated above, the advantageous effect tends to be better achieved.

The amount of the silane coupling agent per 100 parts by mass of the silica in the shoulder rubber composition is preferably 0.1 parts by mass or more, more preferably 3 parts by mass or more, still more preferably 5 parts by mass or more, particularly preferably 7 parts by mass or more. The upper limit of the amount is preferably 50 parts by mass or less, more preferably 20 parts by mass or less, still more preferably 15 parts by mass or less, particularly preferably 10 parts by mass or less. When the amount is within the range indicated above, the advantageous effect tends to be better achieved.

The amount of the plasticizer (total amount of plasticizers) per 100 parts by mass of the rubber component in the shoulder rubber composition is preferably 2 parts by mass or more, more preferably 20 parts by mass or more, still more preferably 23 parts by mass or more, further preferably 43 parts by mass or more, further preferably 50 parts by mass or more, further preferably 56 parts by mass or more, further preferably 58 parts by mass or more. The upper limit is preferably 85 parts by mass or less, more preferably 78 parts by mass or less, still more preferably 63 parts by mass or less, further preferably 61 parts by mass or less. When the amount is within the range indicated above, the advantageous effect tends to be better achieved.

The amount of the plasticizer includes the amounts of oils and resins in the oil-extended rubbers and resin-extended rubbers.

The amount of the solid plasticizers that are solid at 25°C per 100 parts by mass of the rubber component in the shoulder rubber composition is preferably 3 parts by mass or more, more preferably 6 parts by mass or more, still more preferably 8 parts by mass or more. The upper limit is preferably 20 parts by mass or less, more preferably 15 parts by mass or less, still more preferably 10 parts by mass or less. When the amount is within the range indicated above, the advantageous effect tends to be better achieved.

The amount of the resins that are solid at 25°C per 100 parts by mass of the rubber component in the shoulder rubber composition is preferably 3 parts by mass or more, more preferably 6 parts by mass or more, still more preferably 8 parts by mass or more. The upper limit is preferably 20 parts by mass or less, more preferably 15 parts by mass or less, still more preferably 10 parts by mass or less. When the amount is within the range indicated above, the advantageous effect tends to be better achieved.

The amount of the liquid plasticizers that are liquid at 25°C per 100 parts by mass of the rubber component in the shoulder rubber composition is preferably 2 parts by mass or more, more preferably 10 parts by mass or more, still more preferably 15 parts by mass or more, further preferably 33 parts by mass or more, further preferably 40 parts by mass or more, further preferably 41 parts by mass or more, further preferably 43 parts by mass or more, further preferably 48 parts by mass or more. The upper limit is preferably 58 parts by mass or less, more preferably 55 parts by mass or less, still more preferably 53 parts by mass or less. When the amount is within the range indicated above, the advantageous effect tends to be better achieved.

The amount of the liquid plasticizer includes the amount of oils in oil-extended rubbers and the amount of liquid resins in resin-extended rubbers extended with liquid resins.

The amount of the oils per 100 parts by mass of the rubber component in the shoulder rubber composition is preferably 2 parts by mass or more, more preferably 10 parts by mass or more, still more preferably 15 parts by mass or more, further preferably 33 parts by mass or more, further preferably 40 parts by mass or more, further preferably 41 parts by mass or more, further preferably 43 parts by mass or more, further preferably 48 parts by mass or more. The upper limit is preferably 58 parts by mass or less, more preferably 55 parts by mass or less, still more preferably 53 parts by mass or less. When the amount is within the range indicated above, the advantageous effect tends to be better achieved.

The amount of the oils includes the amount of oils in oil-extended rubbers.

The amount of the antioxidant per 100 parts by mass of the rubber component in the shoulder rubber composition is preferably 0.2 parts by mass or more, more preferably 1.0 parts by mass or more, still more preferably 2.0 parts by mass or more, further preferably 3.4 parts by mass or more. The amount is preferably 10.0 parts by mass or less, more preferably 6.0 parts by mass or less.

The amount of the stearic acid per 100 parts by mass of the rubber component in the shoulder rubber composition is preferably 0.5 parts by mass or more, more preferably 1.5 parts by mass or more, still more preferably 2.0 parts by mass or more, further preferably 2.5 parts by mass or more, while it is preferably 10 parts by mass or less, more preferably 5 parts by mass or less.

The amount of the zinc oxide per 100 parts by mass of the rubber component in the shoulder rubber composition is preferably 0.5 parts by mass or more, more preferably 1.5 parts by mass or more, still more preferably 2.0 parts by mass or more, further preferably 2.5 parts by mass or more, while it is preferably 6.0 parts by mass or less, more preferably 4.0 parts by mass or less.

The amount of the wax per 100 parts by mass of the rubber component in the shoulder rubber composition is preferably 0.5 parts by mass or more, more preferably 1.0 parts by mass or more, still more preferably 1.6 parts by mass or more, while it is preferably 8.0 parts by mass or less, more preferably 5.0 parts by mass or less.

The amount of the sulfur per 100 parts by mass of the rubber component in the shoulder rubber composition is preferably 1.0 parts by mass or more, more preferably 1.5 parts by mass or more, still more preferably 1.8 parts by mass or more, further preferably 2.0 parts by mass or more, further preferably 2.1 parts by mass or more. The amount of the sulfur is preferably 5.0 parts by mass or less, more preferably 4.0 parts by mass or less, still more preferably 2.4 parts by mass or less, further preferably 2.2 parts by mass or less. When the amount is within the range indicated above, the advantageous effect tends to be better achieved.

The amount of the vulcanization accelerator in the shoulder rubber composition is not limited and may be freely determined according to the desired curing rate and cross-link density. Still, the amount per 100 parts by mass of the rubber component is preferably 0.5 parts by mass or more, more preferably 1.0 parts by mass or more, still more preferably 1.4 parts by mass or more, further preferably 2.6 parts by mass or more, further preferably 3.0 parts by mass or more. The upper limit is preferably 8.0 parts by mass or less, more preferably 6.0 parts by mass or less, still more preferably 5.0 parts by mass or less, further preferably 3.2 parts by mass or less.

The center rubber (center rubber composition) and the shoulder rubbers (shoulder rubber composition) desirably each contain a plasticizer in an amount (total amount of plasticizers) of 2 parts by mass or more and 85 parts by mass or less per 100 parts by mass of the rubber component. Additionally, the plasticizer in the shoulder rubbers (shoulder rubber composition) desirably has an aromatic vinyl polymer content P(S) (= amount of aromatic vinyl polymers in the shoulder rubbers/amount of plasticizers in the shoulder rubbers) that is higher than the aromatic vinyl polymer content P(C) (= amount of aromatic vinyl polymers in the center rubber/amount of plasticizers in the center rubber) of the plasticizer in the center rubber, i.e., P(C) < P(S).

The mechanism of the enhancement of the advantageous effect provided by controlling the amounts of the plasticizers in both the center rubber and the shoulder rubbers to be 2 parts by mass or more and 85 parts by mass or less and controlling the P(C) and the P(S) to satisfy the relationship: P(C) < P(S) is not clear. Presumably, the presence of a predetermined amount of plasticizers increases the affinity of the rubber compositions at the boundary between the center rubber and the shoulder rubbers, so that the force is more likely to be transmitted at the boundary between the center rubber and the shoulder rubbers. Further, the shoulder rubbers are likely to be warmed due to the higher aromatic vinyl polymer content of the plasticizer in the shoulder rubbers and therefore can better conform to the road. Thus, presumably, the responsiveness during cornering can be enhanced.

The lower limit of the amount of the plasticizer in the center rubber (center rubber composition) and the shoulder rubbers (shoulder rubber composition) per 100 parts by mass of the rubber component is preferably 20 parts by mass or more, more preferably 23 parts by mass or more. The upper limit is preferably 50 parts by mass or less, more preferably 45 parts by mass or less. When the amount is within the range indicated above, the advantageous effect tends to be better achieved.

With regard to the relationship: P(C) < P(S), the ratio P(S)/P(C) is preferably 1.3 or higher, more preferably 1.7 or higher, still more preferably 1.9 or higher, while it is preferably 4.8 or lower, more preferably 4.1 or lower, still more preferably 3.8 or lower, further preferably 3.4 or lower, further preferably 3.1 or lower, further preferably 2.5 or lower, further preferably 2.1 or lower. When the ratio P(S)/P(C) is within the range indicated above, the advantageous effect tends to be better achieved.

The center rubber composition and the shoulder rubber composition each can be produced by, for example, kneading the above-described components using a rubber mixing machine such as an open roll mill or a Banbury mixer and then, for example, cross-linking the kneaded mixture to obtain a cross-linked rubber composition.

The kneading conditions are as follows. In a base kneading step of kneading additives other than vulcanizing agents and vulcanization accelerators, the kneading temperature is preferably 50°C or higher, more preferably 150°C or higher, while it is preferably 200°C or lower, more preferably 190°C or lower. The duration of the kneading is preferably 30 seconds or more, more preferably 1 minute or more, while it is preferably 30 minutes or less. In a final kneading step of kneading vulcanizing agents and vulcanization accelerators, the kneading temperature is preferably 100°C or lower, more preferably 80°C or lower, while it is preferably room temperature or lower. The composition obtained after kneading vulcanizing agents and vulcanization accelerators is usually vulcanized by press vulcanization, for example. The vulcanization temperature is preferably 120°C or higher, more preferably 140°C or higher, while it is preferably 200°C or lower, more preferably 180°C or lower.

The motorcycle tire can be produced using the center rubber composition and the shoulder rubber composition by usual methods. Specifically, the unvulcanized center and shoulder rubber compositions containing the components may be extruded into the shapes of center and shoulder rubbers, respectively, and then assembled with other tire components in a usual manner on a tire building machine to build an unvulcanized tire. The unvulcanized tire may be heated and pressurized in a vulcanizer to produce a tire.

The shoulder rubbers (vulcanized shoulder rubber composition) have a 300% modulus M300(S) [MPa] and the center rubber (vulcanized center rubber composition) has a 300% modulus M300(C) [MPa], and the M300(S) and the M300(C) give a ratio (M300(S)/M300(C)) of 1.15 or higher and 1.50 or lower.

The ratio M300(S)/M300(C) is preferably 1.16 or higher, more preferably 1.17 or higher, still more preferably 1.19 or higher, while it is preferably 1.37 or lower, more preferably 1.35 or lower, still more preferably 1.34 or lower, further preferably 1.32 or lower, further preferably 1.28 or lower, further preferably 1.23 or lower, further preferably 1.21 or lower. When the ratio is within the range indicated above, the advantageous effect tends to be suitably achieved.

The 300% modulus M300(C) of the center rubber (vulcanized center rubber composition) is preferably 4.3 MPa or more, more preferably 5.8 MPa or more, still more preferably 6.1 MPa or more, further preferably 6.3 MPa or more, while it is preferably 9.0 MPa or less, more preferably 8.0 MPa or less, still more preferably 7.5 MPa or less. When the 300% modulus M300(C) is within the range indicated above, the advantageous effect tends to be suitably achieved.

The 300% modulus M300(S) of the shoulder rubbers (vulcanized shoulder rubber composition) is preferably 5.9 MPa or more, more preferably 6.7 MPa or more, still more preferably 7.4 MPa or more, further preferably 7.5 MPa or more, while it is preferably 11.1 MPa or less, more preferably 9.0 MPa or less, still more preferably 8.5 MPa or less, further preferably 8.3 MPa or less, further preferably 7.8 MPa or less. When the 300% modulus M300(S) is within the range indicated above, the advantageous effect tends to be suitably achieved.

Herein, the 300% modulus (M300) of each rubber composition refers to the M300 of the rubber composition after it is vulcanized. The M300 is measured by the method in accordance with JIS K 6251:2010.

The M300 can be controlled by varying the kinds or amounts of chemicals (in particular, rubber components, fillers, plasticizers such as oils and resins, and vulcanizing agents) in the rubber composition. For example, the M300 tends to be increased by increasing the amount of fillers, reducing the amount of plasticizers, increasing the amount of sulfur, or increasing the amount of vulcanization accelerators.

Desirably, the shoulder rubbers (vulcanized shoulder rubber composition) have a complex modulus of elasticity 70°C E*(S) [MPa] at 70°C and the center rubber (vulcanized center rubber composition) has a complex modulus of elasticity 70°C E*(C) [MPa] at 70°C, and the 70°C E*(S) and the 70°C E*(C) give a ratio (70°C E*(S)/70°C E*(C)) of higher than 0.75 and lower than 1.25.

The ratio 70°C E*(S)/70°C E*(C) is preferably higher than 0.85, more preferably higher than 0.91, still more preferably higher than 1.00, while it is preferably lower than 1.20, more preferably lower than 1.15, still more preferably lower than 1.10. When the ratio 70°C E*(S)/70°C E*(C) is within the range indicated above, the advantageous effect tends to be suitably achieved.

The mechanism of the enhancement of the advantageous effect provided by controlling the ratio 70°C E*(S)/70°C E*(C) to be higher than 0.75 and lower than 1.25 is not clear. Presumably, reducing a difference in the rubber hardness between the center rubber and the shoulder rubbers during cornering may suppress a large change in the amount of deformation at the boundary between the center rubber and the shoulder rubbers, thereby improving handling stability. Thus, presumably, cornering performance can be more easily enhanced.

The complex modulus of elasticity 70°C E*(C) at 70°C of the center rubber (vulcanized center rubber composition) is preferably 6.6 MPa or more, more preferably 6.8 MPa or more, still more preferably 7.0 MPa or more, while it is preferably 9.9 MPa or less, more preferably 9.0 MPa or less, still more preferably 8.5 MPa or less, further preferably 7.6 MPa or less, further preferably 7.1 MPa or less. When the 70°C E*(C) is within the range indicated above, the advantageous effect tends to be suitably achieved.

The complex modulus of elasticity 70°C E*(S) at 70°C of the shoulder rubbers (vulcanized shoulder rubber composition) is preferably 5.8 MPa or more, more preferably 6.1 MPa or more, still more preferably 6.3 MPa or more, further preferably 6.4 MPa or more, further preferably 6.5 MPa or more, further preferably 6.8 MPa or more, further preferably 7.0 MPa or more, while it is preferably 8.0 MPa or less, more preferably 7.8 MPa or less, still more preferably 7.6 MPa or less, further preferably 7.4 MPa or less. When the 70°C E*(S) is within the range indicated above, the advantageous effect tends to be suitably achieved.

Herein, the 70°C E* of each rubber composition refers to the 70°C E* of the rubber composition after it is vulcanized. The 70°C E* can be measured by subjecting the vulcanized rubber composition to viscoelastic testing.

The 70°C E* of the (vulcanized) rubber composition is a complex modulus of elasticity at a temperature of 70°C, an initial strain of 10%, a dynamic strain of 1%, and a frequency of 10 Hz in an elongation mode.

The 70°C E* is measured using a sample having a width of 4 mm, a length of 20 mm, and a thickness of 1 mm cut out of a tire such that the longitudinal direction of the sample corresponds to the tangential direction of the tire circumferential direction.

The 70°C E* can be controlled mainly by varying the kinds or amount of rubber components, kinds or amount of fillers, or the amount of plasticizers. Specifically, the 70°C E* tends to be increased by increasing the amount of fillers or reducing the amount of plasticizers.

Desirably, the shoulder rubbers (vulcanized shoulder rubber composition) have a complex modulus of elasticity 30°C E*(S) [MPa] at 30°C and the center rubber (vulcanized center rubber composition) has a complex modulus of elasticity 30°C E*(C) [MPa] at 30°C, and the 30°C E*(S) and the 30°C E*(C) give a ratio (30°C E*(S)/30°C E*(C)) of higher than 0.75 and lower than 1.25.

The ratio 30°C E*(S)/30°C E*(C) is preferably higher than 0.85, more preferably higher than 0.91, still more preferably higher than 0.96, further preferably higher than 1.03, further preferably higher than 1.08, while it is preferably lower than 1.20, more preferably lower than 1.20, still more preferably lower than 1.15. When the ratio 30°C E*(S)/30°C E*(C) is within the range indicated above, the advantageous effect tends to be suitably achieved.

The mechanism of the enhancement of the advantageous effect provided by controlling the ratio 30°C E*(S)/30°C E*(C) to be higher than 0.75 and lower than 1.25 is not clear. Presumably, reducing a difference in the rubber hardness between the center rubber and the shoulder rubbers during straight running may suppress a large change in the amount of deformation at the boundary between the center rubber and the shoulder rubbers, thereby improving handling stability. Thus, presumably, cornering performance can be more easily enhanced.

The complex modulus of elasticity 30°C E*(C) at 30°C of the center rubber (vulcanized center rubber composition) is preferably 6.5 MPa or more, more preferably 8.4 MPa or more, still more preferably 9.2 MPa or more, further preferably 9.4 MPa or more, further preferably 9.5 MPa or more, further preferably 9.9 MPa or more, while it is preferably 16.3 MPa or less, more preferably 13.0 MPa or less, still more preferably 11.0 MPa or less. When the 30°C E*(C) is within the range indicated above, the advantageous effect tends to be suitably achieved.

The complex modulus of elasticity 30°C E*(S) at 30°C of the shoulder rubbers (vulcanized shoulder rubber composition) is preferably 8.0 MPa or more, more preferably 9.2 MPa or more, still more preferably 9.5 MPa or more, further preferably 9.6 MPa or more, further preferably 9.9 MPa or more, further preferably 10.3 MPa or more, further preferably 10.9 MPa or more, while it is preferably 11.7 MPa or less, more preferably 11.5 MPa or less, still more preferably 11.3 MPa or less. When the 30°C E*(S) is within the range indicated above, the advantageous effect tends to be suitably achieved.

Herein, the 30°C E* of each rubber composition refers to the 30°C E* of the rubber composition after it is vulcanized. The 30°C E* can be measured by subjecting the vulcanized rubber composition to viscoelastic testing.

The 30°C E* of the (vulcanized) rubber composition is a complex modulus of elasticity at a temperature of 30°C, an initial strain of 10%, a dynamic strain of 1%, and a frequency of 10 Hz in an elongation mode.

The 30°C E* is measured using a sample having a width of 4 mm, a length of 20 mm, and a thickness of 1 mm cut out of a tire such that the longitudinal direction of the sample corresponds to the tangential direction of the tire circumferential direction.

The 30°C E* can be controlled mainly by varying the kinds or amount of rubber components, kinds or amount of fillers, or the amount of plasticizers. Specifically, the 30°C E* tends to be increased by increasing the amount of fillers or reducing the amount of plasticizers.

### EXAMPLES

The present disclosure is specifically described with reference to examples, but the present disclosure is not limited thereto.

The chemicals used in the examples and comparative examples are listed below.
SBR 1: Tufdene 3830 (styrene content: 36% by mass, vinyl content: 23% by mass, oil content of 37.5 parts by mass per 100 parts by mass of rubber solids) available from Asahi Kasei Corporation
SBR 2: Tufdene 4850 (styrene content: 40% by mass, vinyl content: 47% by mass, oil content of 50 parts by mass per 100 parts by mass of rubber solids) available from Asahi Kasei Corporation
BR: BR150B (cis content: 98% by mass) available from UBE Corporation.
Carbon black: SHOBLACK N110 (N₂SA: 142 m²/g) available from CABOT JAPAN K.K.
Silica: ULTRASIL VN3 (N₂SA: 175 m²/g) available from Evonik
Silane coupling agent: Si69 (bis(3-triethoxysilylpropyl)tetrasulfide) available from Evonik
Oil: Diana Process NH-70 (aromatic process oil) available from Idemitsu Kosan Co., Ltd.
Aromatic vinyl polymer: Sylvatraxx 4401 (a copolymer of α-methylstyrene and styrene, softening point: 85°C, Tg: 43°C) available from Arizona Chemical
Wax: Ozoace 0355 available from Nippon Seiro Co., Ltd.
Antioxidant: Antigene 6C (N-(1,3-dimethylbutyl)-N'-phenyl-p-phenylenediamine) available from Sumitomo Chemical Co., Ltd.
Stearic acid: TSUBAKI available from NOF Corporation
Zinc oxide: Ginrei R available from Toho Zinc Co., Ltd.
Sulfur: HK-200-5 (5%by mass oil-containing powdered sulfur) available from Hosoi Chemical Industry Co., Ltd.
Vulcanization accelerator 1: NOCCELER NS-G (N-tert-butyl-2-benzothiazylsulfenamide) available from Ouchi Shinko Chemical Industrial Co., Ltd.
Vulcanization accelerator 2: NOCCELER D (1,3-diphenylguanidine) available from Ouchi Shinko Chemical Industrial Co., Ltd.

### (Examples and Comparative Examples)

According to the formulation shown in each table, the chemicals other than the sulfur and vulcanization accelerators are kneaded in a Banbury mixer at 60 rpm for four minutes to give a kneaded mixture.

To the kneaded mixture are added the sulfur and vulcanization accelerators, and they are kneaded in a biaxial open two roll mill to give an unvulcanized rubber sheet (thickness: 4 mm).

According to the specification shown in each table, the unvulcanized rubber sheet is processed into the shape of a tread rubber (center or shoulder rubber) and then assembled with other tire components and vulcanized at 170°C for 15 minutes to prepare a test tire (having a groove extending on both the center rubber and one of the shoulder rubbers) having a structure as illustrated in FIG. 1 and FIG. 2.

The test tire prepared above is evaluated as described below. Tables show the results.

The reference comparative example is Comparative Example 1.

### <Viscoelastic test>

Viscoelastic test samples having a length of 40 mm, a width of 3 mm, and a thickness of 0.5 mm are collected from the inside of the center rubber layer and the inside of the shoulder rubber layer in the test tire such that the longitudinal direction of the samples corresponds to the circumferential direction of the tire. The E* of the center rubber and the E* of the shoulder rubber are measured at a temperature of 30°C or 70°C, an initial strain of 10%, a dynamic strain of 1%, and a frequency of 10 Hz in an elongation mode using a RSA series machine available from TA Instruments.

The thickness direction of the samples corresponds to the radial direction of the tire.

### <300% modulus (M300)>

No. 7 dumbbell specimens with a thickness of 1 mm are prepared from samples collected from the inside of the center rubber layer and the inside of the shoulder rubber layer in the test tire. The specimens are subjected to tensile testing at 20°C in accordance with JIS K 6251:2010 to measure the 300% moduli (M300).

### <Running performance (Cornering performance during cornering)>

In order to evaluate the grip of the tire (rear tire), the tire is mounted on a vehicle, and the vehicle is driven in a circuit to measure the running time. Then, a relative value indicating how much the running time is reduced as compared to the running time of a reference tire is determined using the following equation.

The reference tire does not correspond to the tire of the present invention and is a commercial tire with the longest running time.

A larger value indicates better cornering performance. (Cornering performance index) = [(Running time of reference tire - Running time of test tire of each example)/(Running time of reference tire - Running time of test tire of Comparative Example 1)] × 100

### (Test vehicle)

Motorcycle with a displacement of 750 cc
Tire (front tire, rear tire): 120/70ZR17, 180/55ZR17
Rim: (front tire) MT 3.50 × 17, (rear tire) MT 5.50 × 17
Internal pressure: (front tire) 250 kPa, (rear tire) 290 kPa

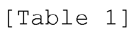

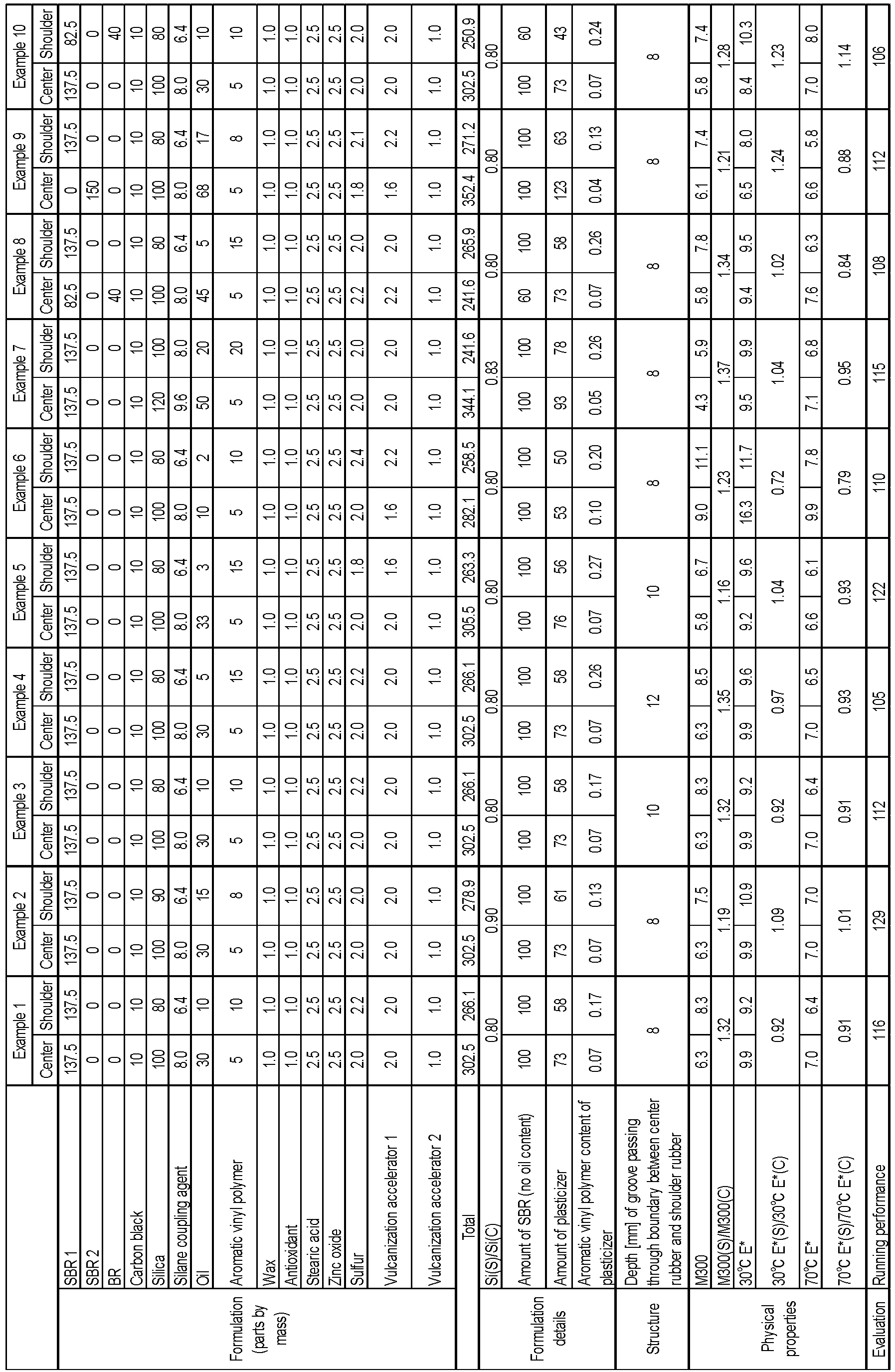

**[Table 2]**

| | | Comparative Example 1 | | Comparative Example 2 | | Comparative Example 3 | | Comparative Example 4 | | Comparative Example 5 | | Comparative Example 6 | | Comparative Example 7 | |
|---|---|---|---|---|---|---|---|---|---|---|---|---|---|---|---|
| | | Center | Shoulder | Center | Shoulder | Center | Shoulder | Center | Shoulder | Center | Shoulder | Center | Shoulder | Center | Shoulder |
| Formulation (parts by mass) | SBR 1 | 137.5 | 137.5 | 137.5 | 137.5 | 137.5 | 137.5 | 137.5 | 137.5 | 137.5 | 137.5 | 0 | 0 | 0 | 0 |
| | SBR 2 | 0 | 0 | 0 | 0 | 0 | 0 | 0 | 0 | 0 | 0 | 150 | 150 | 150 | 150 |
| | BR | 0 | 0 | 0 | 0 | 0 | 0 | 0 | 0 | 0 | 0 | 0 | 0 | 0 | 0 |
| | Carbon black | 10 | 10 | 10 | 10 | 10 | 10 | 10 | 10 | 10 | 10 | 10 | 10 | 10 | 10 |
| | Silica | 100 | 70 | 80 | 100 | 100 | 80 | 100 | 80 | 80 | 100 | 90 | 80 | 100 | 110 |
| | Silane coupling agent | 8.0 | 5.6 | 6.4 | 8.0 | 8.0 | 6.4 | 8.0 | 6.4 | 6.4 | 8.0 | 7.2 | 6.4 | 8.0 | 8.8 |
| | Oil | 25 | 0 | 10 | 25 | 25 | 10 | 25 | 10 | 10 | 25 | 0 | 10 | 10 | 20 |
| | Aromatic vinyl polymer | 10 | 10 | 10 | 10 | 10 | 10 | 10 | 10 | 10 | 10 | 10 | 10 | 10 | 25 |
| | Wax | 1.0 | 1.0 | 1.0 | 1.0 | 1.0 | 1.0 | 1.0 | 1.0 | 1.0 | 1.0 | 2.5 | 2.5 | 2.5 | 2.5 |
| | Antioxidant | 1.0 | 1.0 | 1.0 | 1.0 | 1.0 | 1.0 | 1.0 | 1.0 | 1.0 | 1.0 | 2.5 | 2.5 | 2.5 | 2.5 |
| | Stearic acid | 2.5 | 2.5 | 2.5 | 2.5 | 2.5 | 2.5 | 2.5 | 2.5 | 2.5 | 2.5 | 2.0 | 2.0 | 2.0 | 2.0 |
| | Zinc oxide | 2.5 | 2.5 | 2.5 | 2.5 | 2.5 | 2.5 | 2.5 | 2.5 | 2.5 | 2.5 | 2.0 | 2.0 | 2.0 | 2.0 |
| | Sulfur | 2.0 | 2.0 | 2.0 | 2.5 | 2.5 | 2.0 | 1.5 | 2.0 | 1.5 | 2.5 | 2.0 | 2.0 | 2.0 | 2.0 |
| | Vulcanization accelerator 1 | 2.0 | 2.0 | 2.0 | 2.5 | 2.5 | 2.0 | 1.5 | 2.0 | 1.5 | 2.5 | 2.0 | 2.0 | 2.0 | 2.0 |
| | Vulcanization accelerator 2 | 1.0 | 1.0 | 1.0 | 1.0 | 1.0 | 1.0 | 1.0 | 1.0 | 1.0 | 1.0 | 1.5 | 1.5 | 1.5 | 1.5 |
| Total | | 302.50 | 245.10 | 265.90 | 303.50 | 303.50 | 265.90 | 301.50 | 265.90 | 264.90 | 303.50 | 281.70 | 280.90 | 302.50 | 338.30 |
| Formulation details | Si(S)/Si(C) | 0.70 | | 1.25 | | 0.80 | | 0.80 | | 1.25 | | 0.89 | | 1.10 | |
| | Amount of SBR (no oil content) | 100 | 100 | 100 | 100 | 100 | 100 | 100 | 100 | 100 | 100 | 100 | 100 | 100 | 100 |
| | Amount of plasticizer | 73 | 48 | 58 | 73 | 73 | 58 | 73 | 58 | 58 | 73 | 60 | 70 | 70 | 95 |
| | Aromatic vinyl polymer content of plasticizer | 0.14 | 0.21 | 0.17 | 0.14 | 0.14 | 0.17 | 0.14 | 0.17 | 0.17 | 0.14 | 0.17 | 0.14 | 0.14 | 0.26 |
| Structure | Depth [mm] of groove passing through boundary between center rubber and shoulder rubber | 8 | | 8 | | 8 | | 8 | | 8 | | 8 | | 8 | |
| Physical properties | M300 | 6.4 | 8.9 | 7.7 | 9.1 | 9.1 | 7.7 | 4.1 | 7.7 | 5.1 | 9.1 | 9.7 | 6.8 | 8.2 | 5.1 |
| | M300(S)/M300(C) | 1.39 | | 1.18 | | 0.85 | | 1.88 | | 1.78 | | 0.70 | | 0.62 | |
| | 30°C E* | 10.3 | 9.0 | 9.1 | 11.0 | 11.0 | 9.1 | 9.6 | 9.1 | 8.4 | 11.0 | 10.3 | 7.7 | 10.3 | 7.7 |
| | 30°C E*(S)/30°C E*(C) | 0.87 | | 1.21 | | 0.83 | | 0.95 | | 1.30 | | 0.75 | | 0.75 | |
| | 70°C E* | 7.1 | 5.9 | 6.2 | 8.0 | 8.0 | 6.2 | 6.3 | 6.2 | 5.5 | 8.0 | 6.4 | 4.4 | 6.7 | 5.5 |
| | 70°C E*(S)/70°C E*(C) | 0.83 | | 1.29 | | 0.78 | | 0.99 | | 1.46 | | 0.68 | | 0.83 | |
| Evaluation | Running performance | 100 | | 97 | | 94 | | 91 | | 84 | | 87 | | 88 | |

### REFERENCE SIGNS LIST

1 motorcycle tire
2 tread portion
2A tread face
2e tread edge
3 sidewall portion
4 bead portion
5 bead core
6 carcass
7 belt layer
8 bead apex
9 tread rubber
9A center rubber
9B shoulder rubber
C tire equator
12 normal
9D boundary between center rubber 9A and shoulder rubber 9B
11 groove
11A center longitudinal groove
11B beveled groove
11C bypass groove
E1 one end edge
E2 the other end edge
α camber angle
N normal
L road surface (ground contact surface)
GW groove width
WT tread width

## Claims

1. A motorcycle tire, comprising a tread portion comprising a tread rubber that is divided into at least three parts in a tire width direction,
the tread rubber comprising a center rubber at its central part in the tire width direction and shoulder rubbers respectively on opposite sides of the center rubber in the tire width direction, the tread rubber having a groove extending on both the center rubber and at least one of the shoulder rubbers,
the center rubber and the shoulder rubbers each containing silica in an amount of 70 parts by mass or more per 100 parts by mass of a rubber component therein,
the amount Si(S) of the silica in the shoulder rubbers and the amount Si(C) of the silica in the center rubber giving a ratio (Si(S)/Si(C)) of 0.80 or higher and 0.95 or lower,
the shoulder rubbers having a 300% modulus M300(S) and the center rubber having a 300% modulus M300(C), the M300(S) and the M300(C) giving a ratio (M300(S)/M300(C)) of 1.15 or higher and 1.50 or lower.

2. The motorcycle tire according to claim 1,
wherein the groove has a depth G of 10 mm or less.

3. The motorcycle tire according to claim 1 or 2,
wherein the shoulder rubbers have a complex modulus of elasticity 70°C E*(S) at 70°C and the center rubber has a complex modulus of elasticity 70°C E*(C) at 70°C, the 70°C E*(S) and the 70°C E*(C) giving a ratio (70°C E*(S)/70°C E*(C)) of higher than 0.75 and lower than 1.25.

4. The motorcycle tire according to any one of claims 1 to 3,
wherein the shoulder rubbers have a complex modulus of elasticity 30°C E*(S) at 30°C and the center rubber having a complex modulus of elasticity 30°C E*(C) at 30°C, the 30°C E*(S) and the 30°C E*(C) giving a ratio (30°C E*(S)/30°C E*(C)) of higher than 0.75 and lower than 1.25.

5. The motorcycle tire according to any one of claims 1 to 4,
wherein the center rubber and the shoulder rubbers each contain a plasticizer in an amount of 2 parts by mass or more and 85 parts by mass or less per 100 parts by mass of the rubber component, and
the plasticizer in the shoulder rubbers has an aromatic vinyl polymer content P(S) that is higher than an aromatic vinyl polymer content P(C) of the plasticizer in the center rubber.

6. The motorcycle tire according to any one of claims 1 to 5,
wherein the shoulder rubbers each contain styrene-butadiene rubber in an amount of 70% by mass or more based on 100% by mass of the rubber component.

7. The motorcycle tire according to any one of claims 1 to 6,
wherein at least one of the center rubber or each shoulder rubber contains modified polybutadiene rubber.

8. The motorcycle tire according to any one of claims 1 to 7,
wherein the center rubber contains styrene-butadiene rubber in an amount of 70% by mass or more based on 100% by mass of the rubber component.

9. The motorcycle tire according to any one of claims 1 to 8,
wherein the center rubber contains silica in an amount of 100 parts by mass or more per 100 parts by mass of the rubber component.

10. The motorcycle tire according to any one of claims 1 to 9,
wherein the shoulder rubbers contain silica in an amount of 80 parts by mass or more per 100 parts by mass of the rubber component.

11. The motorcycle tire according to any one of claims 1 to 10,
wherein the center rubber and the shoulder rubbers each contain a resin.

12. The motorcycle tire according to claim 11,
wherein the resin is an aromatic vinyl polymer.

13. The motorcycle tire according to any one of claims 1 to 12,
wherein the center rubber and the shoulder rubbers each contain a plasticizer, and
the plasticizer in the shoulder rubbers has an aromatic vinyl polymer content P(S) and the plasticizer in the center rubber has an aromatic vinyl polymer content P(C), the P(S) and the P(C) giving a ratio (P(S)/P(C)) of 1.3 or higher and 4.8 or lower.
